# EUROPÄISCHE PATENTSCHRIFT

(11) **EP 3 856 535 B1**
(45) Veröffentlichungstag und Bekanntmachung des Hinweises auf die Patenterteilung: **15.01.2025**
(21) Anmeldenummer: 19773015.3
(22) Anmeldetag: 16.09.2019
(51) Int. Cl.: B44C 3/00, B44C 1/17

(54) **DEKORFOLIE, VERFAHREN ZUM DEKORIEREN EINES KUNSTSTOFFFORMTEILS SOWIE KUNSTSTOFFFORMTEIL**
DECORATIVE FILM, METHOD FOR DECORATING A PLASTIC MOULDED ARTICLE, AND PLASTIC MOULDED ARTICLE
FILM DÉCORATIF, PROCÉDÉ DE DÉCORATION D'UNE PIÈCE MOULÉE EN MATIÈRE PLASTIQUE AINSI QUE PIÈCE MOULÉE EN MATIÈRE PLASTIQUE

(30) Priorität: 24.09.2018 DE 102018123473
(43) Veröffentlichungstag der Anmeldung: 04.08.2021
(73) Patentinhaber: LEONHARD KURZ Stiftung & Co. KG, 90763 Fürth (DE)
(72) Erfinder: HAHN, Martin, 91567 Herrieden (DE); HIRSCHBERG, Steven, 90763 Fürth (DE); KIYANAT, Mustafa, 90475 Nürnberg (DE); SIGRITZ, Rainer, 90419 Nürnberg (DE); KRAUSS, Christiane, 91233 Neunkirchen am Sand (DE)
(74) Vertreter: Louis Pöhlau Lohrentz
(86) Internationale Anmeldenummer: PCT/EP2019/074724
(87) Internationale Veröffentlichungsnummer: WO 2020/064404

(56) Entgegenhaltungen:
- EP-A2- 0 537 668
- WO-A1-2015/091383
- DE-A1- 102004 017 093
- DE-A1- 4 212 423

## Beschreibung

Die Erfindung betrifft eine Dekorfolie, ein Verfahren zum Dekorieren eines Kunststoffformteils sowie ein Kunststoffformteil.

Zur Dekoration von Oberflächen werden häufig Dekorfolien eingesetzt, welche beispielsweise mittels In-Mould-Verfahren auf ein Kunststoffformteil aufgebracht werden. An die Oberflächen derartig dekorierter Kunststoffformteile werden hohe Ansprüche gestellt. Einerseits sollen diese Oberflächen gegenüber im täglichen Gebrauch auftretenden mechanischen, physikalischen und chemischen Umwelteinflüssen, beispielsweise durch Fingerabdrücke oder auf der Haut befindlichen Substanzen, wie Sonnenschutzcremes, resistent sein. Hierzu weisen die Dekorfolien häufig an deren Oberfläche eine Schutzlackschicht auf, welche darunterliegende Schichten entsprechend vor den Umwelteinflüssen schützen sollen. Andererseits sollen diese Oberflächen optisch ansprechend sein und auch Dekorelemente, wie beispielsweise Symbole oder Schriftzüge, enthalten. Derartige Dekorelemente werden meist drucktechnisch auf der Dekorfolie erzeugt. Hierdurch ergeben sich jedoch einige Nachteile. So ist sowohl die Positionierung als auch die Auflösung der Dekorelemente durch das verwendete Druckverfahren limitiert. Sollen insbesondere mit individualisierten Dekorfolien dekorierte Kunststoffformteile oder entsprechend dekorierte Kunststoffformteile in geringen Stückzahlen hergestellt werden, ist dies mit hohem zeitlichen und logistischen Aufwand und damit auch mit hohen Kosten verbunden, da die Druckwerkzeuge wie beispielsweise Druckplatten entsprechend für jede individuelle Dekorfolie bereitgestellt und eingerichtet werden müssen. Alternativ können Dekorelemente, wie beispielsweise Symbole oder Schriftzüge, auch mittels Lasergravur in der Dekorfolie erzeugt werden, wobei bei der Gravur jedoch auch eine auf der Oberfläche der Dekorfolie angeordnete Schutzlackschicht zerstört wird, so dass zumindest lokal entweder die Beständigkeit gegenüber Umwelteinflüssen verringert wird oder die Oberfläche des dekorierten Kunststoffformteils mit einer weiteren Schutzlackschicht versehen werden muss, was insbesondere mit weiteren Kosten verbunden ist.

So offenbart die EP 0 537 668 A2 ein Verfahren zur Dekoration oder Beschriftung einer Oberfläche mittels Laserstrahlung sowie die Verwendung einer Prägefolie in diesem Verfahren.

Die DE 42 12 423 A1 offenbart ein Verfahren zur Herstellung von Bedienelementen mit hinterleuchtbaren Symbolen. Die WO 2015/091383 A1 betrifft ein Kunststoffformteil und ein Verfahren zu dessen Herstellung.

Der Erfindung liegt nun die Aufgabenstellung zugrunde, eine verbesserte Dekorfolie sowie ein verbessertes Verfahren zum Dekorieren eines Kunststoffformteils bereitzustellen.

Diese Aufgabe wird gelöst von einer Dekorfolie nach Anspruch 1. Weiter wird diese Aufgabe gelöst durch ein Verfahren zum Dekorieren eines Kunststoffformteils nach Anspruch 12. Ferner wird diese Aufgabe auch gelöst von einem Kunststoffformteil nach Anspruch 15.

Hierbei hat sich gezeigt, dass durch die erfindungsgemäße Dekorfolie, durch das Verfahren zum Dekorieren des Kunststoffformteils sowie das Kunststoffformteil die Beständigkeit der Dekorfolie bzw. die Beständigkeit eines mit der Dekorfolie dekorierten Kunststoffformteils erhöht wird, wobei gleichzeitig eine Individualisierbarkeit der Dekorfolie gewährleistet ist. Dadurch, dass die Dekorfolie zwischen den Farblackschichten eine transparente Laserschutzlackschicht aufweist, wird es ermöglicht, dass auch nach Entfernen einer Farblackschicht und der darauf angeordneten Schutzlackschicht, die darunterliegende Farblackschicht vor mechanischen, physikalischen und chemischen Umwelteinflüssen geschützt ist ohne dass das individualisierte Kunststoffformteil beispielsweise erneut mit einer Schutzlackschicht versehen werden muss. Weiter wird durch die transparente Laserschutzlackschicht auch sichergestellt, dass einerseits die zu entfernende Farblackschicht vollständig, d.h. insbesondere ohne Rückstände, abgetragen werden kann ohne, dass die darunter angeordnete Farblackschicht verletzt wird. Die transparente Laserschutzlackschicht erfüllt daher eine Doppelfunktion, zum einen schützt diese die unterhalb der transparenten Laserschutzlackschicht angeordnete Farblackschicht vor Umwelteinflüssen und zum anderen dient diese als Abstands- bzw. Pufferschicht für den abtragenden Laser. Hierdurch wird es ermöglicht, Kunststoffformteile individuell mit Dekorelementen, wie beispielsweise Symbolen oder Schriftzügen, beispielsweise kundenspezifisch zu einem späteren Zeitpunkt des Herstellungsprozesses, zu versehen, wobei sichergestellt ist, dass die Dekorfolie die geforderten Spezifikationen bezüglich der Beständigkeit erfüllt, ohne dass komplexe und langwierige Nachfolgeprozesse, wie beispielsweise das Aufbringen einer neuen Schutzlackschicht, notwendig sind. Weiter werden hierdurch auch größere Toleranzen bei der Fokussierung des Lasers ermöglicht, wodurch die Produktion weiter vereinfacht wird.

Unter den Bezeichnungen unterhalb und/oder oberhalb wird hierbei insbesondere die Anordnung von Schichten in Bezug auf eine andere Schicht bei Betrachtung durch einen Betrachter aus einer Betrachtungsrichtung verstanden. So ist es zweckmäßig, wenn die Bezeichnungen unterhalb und/oder oberhalb ein Bezugssystem darstellen. So ist es beispielsweise möglich, dass die zumindest eine zweite Farblackschicht in Betrachtungsrichtung unterhalb der transparenten Laserschutzlackschicht angeordnet ist.

Erfindungsgemäß ist vorgesehen, dass die zumindest eine erste Farblackschicht auf der einem Betrachter zugewandten Seite der transparenten Laserschutzlackschicht angeordnet und die zumindest eine zweite Farblackschicht auf der dem Betrachter abgewandten Seite der transparenten Laserschutzlackschicht angeordnet ist. Die zumindest eine erste Farblackschicht bildet die einem Betrachter zugewandte Seite. Die zumindest eine zweite Farblackschicht ist in Betrachtungsrichtung unterhalb der transparenten Laserschutzlackschicht und unterhalb der zumindest ersten Farblackschicht angeordnet.

Vorzugsweise wird unter einer transparenten Laserschutzlackschicht eine transparente Schutzlackschicht, insbesondere transparente Zwischenschutzlackschicht verstanden, welche die zumindest eine zweite Farblackschicht, insbesondere die von einem Betrachter aus gesehen unterhalb dieser transparenten Zwischenschutzlackschicht liegenden Schichten, vor mechanischen, physikalischen und/oder chemischen Umwelteinflüssen schützt und/oder die derart ausgestaltet ist, dass diese weiter als Abstands- bzw. Pufferschicht für den abtragenden Laser dient. So ist es möglich, dass die transparente Laserschutzlackschicht eine transparente Schutzlackschicht, insbesondere eine transparente Zwischenschutzlackschicht ist.

Unter Bereich wird hierbei insbesondere jeweils eine definierte Fläche einer Schicht oder Lage verstanden, die bei Betrachtung senkrecht zu einer von der Dekorfolie, insbesondere von der zumindest einen ersten Farblackschicht, der transparenten Laserschutzlackschicht und/oder der zumindest einen zweiten Farblackschicht, aufgespannten Ebene eingenommen wird. So weist beispielsweise die zumindest eine erste Farblackschicht ein oder mehrere erste Bereiche auf, wobei jeder der Bereiche jeweils eine definierte Fläche bei Betrachtung senkrecht zu einer von der zumindest einen ersten Farblackschicht aufgespannten Ebene einnimmt.

Unter Entfernen einer Schicht wird hierbei das teilweise und/oder vollständige Entfernen einer Schicht, insbesondere mittels Laserschneiden und/oder Laserablation, verstanden. Wird beispielsweise eine Schicht in einem Bereich entfernt, ist die entsprechende Schicht in diesem Bereich teilweise und/oder vollständig entfernt worden. Die Entfernung erfolgt hierbei bevorzugt aufgrund von Laserschneiden und/oder Laserablation. Unter Entfernen wird auch das teilweise und/oder vollständige Entfernen einer Schicht, insbesondere mittels mechanischer bzw. feinmechanischer Methoden verstanden, beispielsweise mittels Fräsen und/oder Schleifen und/oder Bohren.

Unter teilweise entfernt wird hierbei bevorzugt verstanden, dass die teilweise entfernte Schicht derart verändert bzw. zerstört wird, dass diese ihre vorbestimmten Eigenschaften nicht mehr erfüllt. So erfüllt beispielsweise eine teilweise entfernte Schutzlackschicht nicht mehr ihre vorbestimmte Eigenschaft darunter angeordnete Schichten vor chemischen, physikalischen und/oder mechanischen Umwelteinflüssen zu schützen.

Unter vollständig entfernt wird hierbei bevorzugt verstanden, dass die vollständig entfernten Schichten in den entsprechenden Bereichen rückstandslos abgetragen und/oder ablatiert und/oder verbrannt und/oder verdampft werden. Wird so beispielsweise die zumindest eine erste Farblackschicht in den ein oder mehreren ersten Bereichen, insbesondere mittels Laserschneiden und/oder Laserablation, vollständig entfernt, so ist die zumindest eine erste Farblackschicht in den ein oder mehreren ersten Bereichen rückstandslos abgetragen.

Weitere vorteilhafte Ausgestaltungen der Erfindung sind in den Unteransprüchen bezeichnet.

Weiter ist es von Vorteil, wenn die transparente Laserschutzlackschicht eine Schichtdicke zwischen 0,5 µm und 50 µm, bevorzugt zwischen 2,0 µm und 2,5 µm, aufweist.

Erfindungsgemäß ist in ein oder mehreren ersten Bereichen die einem Betrachter zugewandte zumindest eine erste Farblackschicht derart entfernt, dass die transparente Laserschutzlackschicht freigelegt ist. Vorzugsweise ist in den ein oder mehreren ersten Bereichen die, einem Betrachter zugewandte, zumindest eine erste Farblackschicht vollständig entfernt. Hierdurch wird es ermöglicht, dass die transparente Laserschutzlackschicht und insbesondere in Betrachtungsrichtung unterhalb der transparenten Laserschutzlackschicht angeordnete Schichten für einen Betrachter sichtbar werden, insbesondere bei Hinterleuchtung der Dekorfolie mittels eines Hinterleuchtungsmittels sichtbar werden.

Vorteilhafterweise bilden die ein oder mehreren ersten Bereiche Dekorelemente, wie beispielsweise Symbole oder Schriftzüge, aus.

Weiter ist es zweckmäßig, wenn die ein oder mehreren ersten Bereiche ein Logo und/oder ein Symbol und/oder ein Muster und/oder ein alphanumerisches Zeichen darstellen.

Weiter ist es auch bevorzugt, wenn die ein oder mehreren ersten Bereiche bei Betrachtung senkrecht auf die Dekorfolie eine Linienstärke von mindestens 50 µm, bevorzugt von mindestens 100 µm, aufweisen und/oder wenn die ein oder mehreren ersten Bereiche bei Betrachtung senkrecht auf die Dekorfolie eine Linienstärke von maximal 2 mm, bevorzugt von maximal 1 mm, weiter bevorzugt von maximal 0,5 mm, aufweisen.

Weiter ist es auch möglich, dass die transparente Laserschutzlackschicht derart ausgestaltet ist, dass die Schichtdicke der transparenten Laserschutzlackschicht in den ein oder mehreren ersten Bereichen, in welchen die zumindest eine erste Farblackschicht mittels eines Lasers entfernt ist im Vergleich zu denjenigen Bereichen, in welchen die zumindest eine erste Farblackschicht nicht mittels des Lasers entfernt ist, um weniger als 25 %, bevorzugt um weniger als 15 %, weiter bevorzugt, um weniger als 5 %, verringert wird.

Auch ist es sinnvoll, wenn die Schichtdicke der transparenten Laserschutzlackschicht in ein oder mehreren ersten Bereichen, in welchen die zumindest eine erste Farblackschicht mittels eines Lasers entfernt ist, im Wesentlichen der Schichtdicke der transparenten Laserschutzlackschicht in denjenigen Bereichen entspricht, in welchen die zumindest eine erste Farblackschicht nicht mittels des Lasers entfernt ist.

Insbesondere ist eine eventuelle leichte oberflächliche Verletzung der transparenten Laserschutzlackschicht bei der Individualisierung hinnehmbar, vorzugsweise solange dabei die Gesamtdicke der transparenten Laserschutzlackschicht um nicht mehr als 50 %, bevorzugt um nicht mehr als 30 %, verringert wird.

Hierdurch ist insbesondere im Endprodukt unter anderem sichergestellt, dass die transparente Laserschutzlackschicht zum einen Ihre Schutzfunktion gegenüber Umwelteinflüssen für die darunterliegenden Schichten erfüllt und zum anderen, dass die transparente Laserschutzlackschicht auch ihre Funktion als Abstands- bzw. Pufferschicht erfüllt bzw. erfüllt hat.

Vorzugsweise weist die transparente Laserschutzlackschicht eine Transmission, insbesondere im Wellenlängenbereich zwischen 380 nm bis 780 nm, von mindestens 25 %, bevorzugt von mindestens 75 %, weiter bevorzugt von mindestens 85 %, auf. Hierdurch wird es unter anderem ermöglicht, dass die in Betrachtungsrichtung unterhalb der transparenten Laserschutzlackschicht angeordneten Schichten, für einen Betrachter sichtbar sind.

Weiter ist es von Vorteil, wenn die transparente Laserschutzlackschicht eine Transmission im Infrarotbereich, bevorzugt dem nahen Infrarotbereich, weiter bevorzugt im Wellenlängenbereich zwischen 780 nm und 1400 nm, noch weiter bevorzugt für Licht der Wellenlänge von 1064 nm, von mindestens 25 %, bevorzugt von mindestens 75 %, weiter bevorzugt von mindestens 85 % aufweist. Hierdurch wird es ermöglicht, dass Licht eines Infrarotlasers zum Entfernen der oberhalb der transparenten Laserschutzlackschicht angeordneten Schichten, insbesondere der zumindest einen ersten Farblackschicht, in der transparenten Laserschutzlackschicht nicht absorbiert wird und diese nicht beschädigt bzw. entfernt.

Weiter ist es sinnvoll, wenn die transparente Laserschutzlackschicht hitzebeständig, insbesondere bis zu einer Temperatur von 250 °C, bevorzugt bis 650 °C, weiter bevorzugt bis 1000 °C, ist.

Es ist von Vorteil, wenn die transparente Laserschutzlackschicht transmittiertes Licht, insbesondere Licht im Wellenlängenbereich zwischen 380 nm und 780 nm, diffus streut, und/oder wenn die transparente Laserschutzlackschicht einen Haze-Wert von höchstens 50 Haze-Units, insbesondere von höchstens 20 Haze-Units, aufweist.

Bevorzugt wird der Haze-Wert in Haze-Units in Transmission nach dem ASTM D 1003 Standard bestimmt. Beispielsweise wird der Haze-Wert mit dem Messgerät "BYK haze-gard i" der Firma Byk-Gardener, Geretsried, Deutschland, gemessen. Hierbei wird vorzugsweise die zu vermessende Schicht oder Folie in den offenen Probenraum des Messgerätes gehalten, und insbesondere für den Haze-Wert an den sogenannten "haze-port" des Gerätes angelegt, wobei die Messung vorteilhafterweise mittels Normlicht D65 durchgeführt wird. Anschließend wird bevorzugt das Ergebnis der Messung am Bildschirm des Messgerätes angezeigt. Der Haze-Wert wird vorteilhafterweise in Prozent (%) angeben. Daher ist es möglich, dass die Einheit des Haze-Wertes in diesem Fall Prozent (%) ist. Der Wertebereich des Haze-Wertes beträgt daher bevorzugt 0-100 %. So ist es möglich, dass es sich bei den Haze-Units um Prozentwerte handelt bzw. dass die Haze-Units Prozentwerte darstellen. Bevorzugt beträgt der Maximalwert 100 %. Gegebenenfalls auftretende höhere Werte als 100 % können beispielsweise, insbesondere in Abhängigkeit des verwendeten Messprinzips, durch zusätzliche Streulichteffekte und/oder Reflektionseffekte während der Messung verursacht werden.

Unter Haze wird hierbei bevorzugt eine diffuse Streuung, insbesondere Großwinkelstreuung, verstanden, welche insbesondere zu einer Abnahme der Abbildungsqualität führt. Als Streuzentren wirken dabei bevorzugt Teilchen oder Inhomogenitäten im Material, an welchen insbesondere das Licht in alle Raumrichtungen gestreut wird, wobei vorteilhafterweise auf jeden Raumwinkel nur eine geringe Streuintensität entfällt. Hierdurch wird insbesondere eine Verminderung des Kontrasts und/oder ein milchig-trübes Erscheinungsbild bewirkt, wobei dieser Effekt vorzugsweise als Haze oder Trübung bezeichnet wird. So stellt der Haze-Wert bevorzugt ein Maß für die Trübung von transparenten Proben, beispielsweise von Kunststoffschichten oder -folien, dar.

Weiter ist es zweckmäßig, dass das Verhältnis des von der transparenten Laserschutzlackschicht aus dem Winkelbereich von weniger als 2,5° aus der Richtung des einfallenden Lichts in Transmission abgelenkten Lichtes im Verhältnis zu dem gesamten von der transparenten Laserschutzlackschicht transmittierten Lichts kleiner als 0,5, bevorzugt kleiner als 0,2, ist. In anderen Worten ist es möglich, dass die transparente Laserschutzlackschicht weniger als 50 %, bevorzugt weniger als 20 %, des transmittierten Lichts, insbesondere aus dem Wellenlängenbereich zwischen 380 nm und 780 nm, um mehr als 2,5° von der Richtung des einfallenden Lichtstrahls ablenkt.

Weiter ist es jedoch auch möglich, dass die transparente Laserschutzlackschicht ein milchig-trübes Erscheinungsbild aufweist und/oder dass die transparente Laserschutzlackschicht mehr als 30 %, bevorzugt mehr als 45 %, weiter bevorzugt mehr als 65 %, des transmittierten Lichts, insbesondere aus dem Wellenlängenbereich zwischen 380 nm und 780 nm, um mehr als 2,5° von der Richtung des einfallenden Lichtstrahls ablenkt. In anderen Worten ist es möglich, dass die transparente Laserschutzlackschicht weniger als 30 %, bevorzugt weniger als 45 %, weiter bevorzugt weniger als 65 %, des transmittierten Lichts, insbesondere aus dem Wellenlängenbereich zwischen 380 nm und 780 nm, um weniger als 2,5° von der Richtung des einfallenden Lichtstrahls ablenkt.

Weiter ist es möglich, dass das Verhältnis des von der transparenten Laserschutzlackschicht aus dem Winkelbereich von weniger als 2,5° aus der Richtung des einfallenden Lichts in Transmission abgelenkten Lichtes im Verhältnis zu dem gesamten von der transparenten Laserschutzlackschicht transmittierten Lichts größer als 0,3, bevorzugt größer als 0,45, weiter bevorzugt größer als 0,65, ist.

Hierdurch wird es möglich, dass durch die transparente Laserschutzlackschicht transmittiertes Licht diffus, bevorzugt in einen großen Raumwinkelbereich, weiter bevorzugt in alle Raumrichtungen, gestreut wird, so dass Licht, insbesondere einer Punktlichtquelle, homogen gestreut wird, so dass die transparente Laserschutzlackschicht für einen Betrachter, insbesondere trotz Beleuchtung mit einer Punktlichtquelle, homogen beleuchtet erscheint.

Auch ist es möglich, dass die transparente Laserschutzlackschicht eingefärbt ist, insbesondere dass die transparente Laserschutzlackschicht mittels Farbstoffen und/oder Farbpigmenten eingefärbt ist. Vorzugsweise beträgt der Pigmentierungsgrad der transparenten Laserschutzlackschicht weniger als 15 %, bevorzugt weniger als 10 %, weiter bevorzugt weniger als 5 %. Hierdurch wird es insbesondere ermöglicht, dass die transparente Laserschutzlackschicht in Verbindung mit unterhalb der transparenten Laserschutzlackschicht angeordneten Schichten, insbesondere in Verbindung mit der zumindest einen zweiten Farblackschicht, einen speziellen optischen Eindruck, wie beispielsweise einen Farbmischeffekt, erzeugt.

Es ist jedoch auch möglich, dass die transparente Laserschutzlackschicht farblos ist und/oder klar transparent ist und/oder dass der Pigmentierungsgrad der transparenten Laserschutzlackschicht 0 % beträgt.

Es ist von Vorteil, wenn die transparente Laserschutzlackschicht eine Schicht aus Monomeren, Oligomeren, Polymeren und/oder Copolymeren, bevorzugt umfassend Polymethylmethacrylat (PMMA), Polyester, Polycarbonat (PC), Polyamid (PA), Polyurethane (PU) und/oder Polyvinylchlorid (PVC), weiter bevorzugt umfassend PU und/oder PVC, ist und/oder dass die transparente Laserschutzlackschicht Polyacrylat als Bindemittel aufweist.

Weiter ist es auch möglich, dass die transparente Laserschutzlackschicht Polyetherimide (PEI) und/oder Polysulfone, wie beispielsweise Poly(arylethersulfon)e (PAES), aufweist.

Weiter ist es auch möglich, dass die transparente Laserschutzlackschicht thermisch und/oder durch energiereiche Strahlung aushärtet bzw. ausgehärtet ist/wird. Bevorzugt erfolgt die Härtung vor und/oder nach der Verarbeitung der Dekorfolie und/oder Applikation der Dekorfolie auf ein Substrat.

Durch derartige Zusammensetzungen der transparenten Laserschutzlackschicht wird es ermöglicht, dass unterhalb der transparenten Laserschutzlackschicht angeordnete Schichten bevorzugt besonders gut gegenüber mechanischen, physikalischen und/oder chemischen Umwelteinflüssen geschützt sind.

Vorteilhafterweise schützt die transparente Laserschutzlackschicht die zumindest eine zweite Farblackschicht, insbesondere die von einem Betrachter aus gesehen unterhalb der transparenten Laserschutzlackschicht liegenden Schichten, vor mechanischen, physikalischen und/oder chemischen Umwelteinflüssen.

Bevorzugt ist die zumindest eine erste Farblackschicht opak ausgebildet und/oder weist die zumindest eine erste Farblackschicht eine Transmission, insbesondere im Wellenlängenbereich zwischen 380 nm bis 780 nm, von maximal 50 %, bevorzugt von maximal 20 %, weiter bevorzugt von maximal 5 %, auf. Hierdurch wird erreicht, dass die Dekorfolie, insbesondere bei Betrachtung von der Seite der zumindest einen ersten Farblackschicht her, einen dunklen optischen Eindruck erzeugt, insbesondere der einen dunkel erscheinenden Hintergrund im Hinblick auf eine mögliche Hinterleuchtung zur Verfügung stellt. Dadurch kann insbesondere ein besonders hoher Kontrast zwischen der Hinterleuchtung und diesem Hintergrund erreicht werden und die Hinterleuchtung kann auch bei geringen Hinterleuchtungs-Lichtstärken ausreichend gut wahrgenommen werden.

Vorzugsweise weist die zumindest eine erste Farblackschicht eine Schichtdicke zwischen 0,1 µm und 50 µm, bevorzugt zwischen 0,5 µm und 5,0 µm, auf. Hierdurch kann einerseits die benötigte Opazität der zumindest einen ersten Farblackschicht und anderseits die Herstellung eines dünnen und gegebenenfalls flexiblen Kunststoffformteils unter Verwendung der Dekorfolie sichergestellt werden.

Weiter ist es möglich, dass die zumindest eine erste Farblackschicht mehrschichtig ist, insbesondere dass die zumindest eine erste Farblackschicht aus zwei oder mehreren ersten Teilschichten ausgebildet ist, wobei die zwei oder mehreren ersten Teilschichten bevorzugt jeweils eine Schichtdicke zwischen 0,1 µm und 50 µm, weiter bevorzugt zwischen 0,5 µm und 5,0 µm, aufweisen.

Weiter ist es sinnvoll, wenn die zwei oder mehreren ersten Teilschichten unterschiedliche Farben, insbesondere aus dem RGB-Farbraum oder dem CMYK-Farbraum, aufweisen.

Unter Farbe wird hierbei insbesondere ein Farbpunkt verstanden, der in einem Farbmodell wie z.B. dem RGB-Farbmodell (R = Rot; G = Grün; B = Blau) oder dem CMYK-Farbmodell (C = Cyan; M = Magenta; Y = Gelb; K = Schwarz) innerhalb des Farbraums dargestellt werden kann.

Weiter ist es denkbar, dass die zumindest eine erste Farblackschicht bereichsweise ausgebildet ist, insbesondere dass die zumindest eine erste Farblackschicht in zumindest einem zweiten Bereich vorhanden ist und in zumindest einem dritten Bereich nicht vorhanden ist.

Auch ist es vorteilhaft, wenn die zumindest eine erste Farblackschicht eingefärbt ist, insbesondere dass die zumindest eine erste Farblackschicht mittels Farbstoffen und/oder Farbpigmenten eingefärbt ist. Vorzugsweise beträgt der Pigmentierungsgrad der zumindest einen ersten Farblackschicht zwischen 5 % und 35 %, bevorzugt zwischen 20 % und 25 %.

So ist es möglich, dass die zumindest eine erste Farblackschicht dunkel, insbesondere schwarz, eingefärbt ist, und/oder dass die zumindest eine erste Farblackschicht Licht absorbierende Partikel, insbesondere Ruß, aufweist.

Zweckmäßigerweise ist die zumindest eine erste Farblackschicht aus Polyethylenterephthalat (PET), PMMA, Polyethylennaphthalat (PEN), PA und/oder Acrylnitril-Butadien-Styrol-Copolymerisat (ABS) ausgebildet und/oder weist die zumindest eine erste Farblackschicht Acrylat als Bindemittel auf.

Auch ist es möglich, dass die zumindest eine erste Farblackschicht eine erste Metallschicht ist, insbesondere eine optisch dichte Metallschicht ist, welche bevorzugt eine geringere Transmission im Vergleich zu der zumindest einen zweiten Farblackschicht, insbesondere im Vergleich zu der zweiten Metallschicht, aufweist.

Weiter ist möglich, dass auch die zumindest eine zweite Farblackschicht eine zweite Metallschicht ist, insbesondere eine optisch dünne Metallschicht ist, welche bevorzugt eine größere Transmission im Vergleich zu der zumindest einen ersten Farblackschicht, insbesondere im Vergleich zu der ersten Metallschicht, aufweist.

Vorteilhafterweise weist die erste Metallschicht eine Transmission, insbesondere im Wellenlängenbereich zwischen 380 nm bis 780 nm, von maximal 30 %, bevorzugt von maximal 10 %, weiter bevorzugt von maximal 5 %, auf.

Die zweite Metallschicht weist bevorzugt eine Transmission, insbesondere im Wellenlängenbereich zwischen 380 nm bis 780 nm, von mehr als 10 %, bevorzugt von mehr als 25 %, weiter bevorzugt von mehr als 50 %, noch weiter bevorzugt von mehr als 75 %, ferner noch weiter bevorzugt von mehr als 90 %, auf.

Ferner ist es von Vorteil, wenn die Schichtdicke der ersten Metallschicht zwischen 10 nm und 1 µm, bevorzugt zwischen 20 nm und 300 nm, beträgt.

Die Schichtdicke der zweiten Metallschicht beträgt vorzugsweise zwischen 1 nm und 500 nm, bevorzugt zwischen 10 nm und 80 nm.

Hierdurch wird insbesondere erreicht, dass die erste Metallschicht aufgrund ihrer geringeren Transmission vom Betrachter als opak wahrgenommen wird, während die zweite Metallschicht transparent ist.

Der funktionale Zusammenhang zwischen Transmission (T) und optischer Dickte (OD) formuliert sich dabei wie folgt: OD = log (100/T[%]).

Die Transmissionswerte werden, wie oben dargelegt, insbesondere im Wellenlängenbereich zwischen 380 nm bis 780 nm, d.h. im für das menschliche Auge sichtbaren Wellenlängenbereich, ermittelt.

Die optische Dichte einer Metallschicht hängt insbesondere neben der verwendeten Schichtdicke unter anderem von dem verwendeten Metall ab.

So ist es möglich, dass die erste Metallschicht und/oder die zweite Metallschicht aus Aluminium, Kobalt, Kupfer, Gold, Eisen, Chrom, Nickel, Silber, Platin, Palladium und/oder Titan oder Legierungen daraus ausgebildet ist. Vorzugsweise wird Aluminium für die optisch dichtere erste Metallschicht aufgrund seiner geringen Eindringtiefe für Licht aus dem für das menschliche Auge sichtbaren Wellenlängenbereich und Gold, Kupfer, Chrom, Silber und/oder Eisen für die optisch dünnere zweite Metallschicht aufgrund ihrer großen Eindringtiefe für Licht aus dem für das menschliche Auge sichtbaren Wellenlängenbereich verwendet.

Erfindungsgemäß weist die zumindest eine zweite Farblackschicht eine Transmission, insbesondere im Wellenlängenbereich zwischen 380 nm bis 780 nm, von mindestens 10 % auf. Weiter ist es von Vorteil, dass die zumindest eine zweite Farblackschicht transparent ausgebildet ist und/oder dass die zumindest eine zweite Farblackschicht eine Transmission, insbesondere im Wellenlängenbereich zwischen 380 nm bis 780 nm, von mindestens 25 %, bevorzugt von mindestens 75 %, weiter bevorzugt von mindestens 90 %, aufweist.

So ist es von Vorteil, wenn die zumindest eine zweite Farblackschicht durchleuchtbar, insbesondere mittels eines Hinterleuchtungsmittels durchleuchtbar ist, und/oder wenn die zumindest eine zweite Farblackschicht derart ausgestaltet ist, dass mehr als 10 %, bevorzugt mehr als 25 %, weiter bevorzugt mehr als 75 %, noch weiter bevorzugt mehr als 90 % des Lichts, welches von einem in Betrachtungsrichtung hinter der zumindest einen zweiten Farblackschicht angeordneten Hinterleuchtungsmittel abgestrahlt wird, transmittiert wird.

Hierdurch wird es möglich, dass Licht durch die zumindest eine zweite Farblackschicht hindurchtreten kann und so von einem Betrachter, der die Dekorfolie von der Seite der zumindest einen ersten Farblackschicht aus betrachtet, wahrgenommen werden kann.

Vorteilhafterweise weist die zumindest eine zweite Farblackschicht eine Schichtdicke zwischen 0,1 µm und 50 µm, bevorzugt zwischen 1,0 µm und 5,0 µm, auf.

Auch hier ist es möglich, dass die zumindest eine zweite Farblackschicht mehrschichtig ist, insbesondere dass die zumindest eine zweite Farblackschicht aus zwei oder mehreren zweiten Teilschichten ausgebildet ist, wobei die zwei oder mehreren zweiten Teilschichten bevorzugt jeweils eine Schichtdicke zwischen 0,1 µm und 50 µm, weiter bevorzugt zwischen 1,0 µm und 5,0 µm, aufweisen.

Bevorzugt ist die zumindest eine zweite Farblackschicht vollflächig ausgebildet, insbesondere nimmt die zumindest eine zweite Farblackschicht die gesamte Fläche bei Betrachtung senkrecht auf die Dekorfolie ein.

Weiter ist es von Vorteil, dass die zumindest eine zweite Farblackschicht, insbesondere Licht im Wellenlängenbereich zwischen 380 nm und 780 nm, diffus streut, und/oder dass die zumindest eine zweite Farblackschicht einen Haze-Wert von mindestens 50 Haze-Units, bevorzugt von mindestens 75 Haze-Units, aufweist.

Erfindungsgemäß lenkt die zumindest eine zweite Farblackschicht mehr als 50 % des transmittierten Lichts, insbesondere aus dem Wellenlängenbereich zwischen 380 nm und 780 nm, um mehr als 2,5° von der Richtung des einfallenden Lichtstrahls ab. In anderen Worten lenkt die zumindest eine zweite Farblackschicht weniger als 50 % des transmittierten Lichts, insbesondere aus dem Wellenlängenbereich zwischen 380 nm und 780 nm, um weniger als 2,5° von der Richtung des einfallenden Lichtstrahls ab. Auch ist es vorteilhaft, wenn die zumindest eine zweite Farblackschicht mehr als 75 %, bevorzugt mehr als 85 %, des transmittierten Lichts, insbesondere aus dem Wellenlängenbereich zwischen 380 nm und 780 nm, um mehr als 2,5° von der Richtung des einfallenden Lichtstrahls ablenkt. In anderen Worten ist es möglich, dass die zumindest eine zweite Farblackschicht weniger als 75 %, bevorzugt weniger als 85 %, des transmittierten Lichts, insbesondere aus dem Wellenlängenbereich zwischen 380 nm und 780 nm, um weniger als 2,5° von der Richtung des einfallenden Lichtstrahls ablenkt.

Hierdurch wird es möglich, dass durch die zumindest eine zweite Farblackschicht transmittiertes Licht diffus, bevorzugt in einen großen Raumwinkelbereich, weiter bevorzugt in alle Raumrichtungen, gestreut wird, so dass Licht, insbesondere einer Punktlichtquelle, homogen gestreut wird, so dass die zumindest eine zweite Farblackschicht für einen Betrachter, insbesondere trotz Beleuchtung mit einer Punktlichtquelle, homogen beleuchtet erscheint.

So ist es möglich, dass die zumindest eine zweite Farblackschicht eine Diffusorfolie ausbildet und/oder dass die zumindest eine zweite Farblackschicht eine Diffusorfolie ist.

Unter Diffusorfolie wird hier eine insbesondere selbsttragende, trockene Schicht verstanden, die beispielsweise mittels Verkleben oder Lamination oder ähnlichen Verfahren aufgebracht werden kann. Eine solche Diffusorfolie stellt bevorzugt eine Alternative zu einer in einem Nassverfahren gedruckten oder gegossenen zweiten Farblackschicht dar.

Weiter ist es denkbar, dass die zumindest eine zweite Farblackschicht eingefärbt ist, insbesondere dass die zumindest eine zweite Farblackschicht mittels Farbstoffen und/oder Farbpigmenten eingefärbt ist. Vorzugsweise beträgt der Pigmentierungsgrad der zumindest einen zweiten Farblackschicht zwischen 5 % und 80 %, bevorzugt zwischen 40 % und 45 %.

Zweckmäßigerweise ist die zumindest eine zweite Farblackschicht aus PET, PMMA, PEN, PA und/oder ABS ausgebildet und/oder weist die zumindest eine zweite Farblackschicht Acrylat als Bindemittel auf.

Gemäß einem weiteren Ausführungsbeispiel der Erfindung ist die zweite Farblackschicht oder eine an die zweite Farblackschicht angrenzende Schicht als Lichtleiterschicht ausgebildet. Bevorzugt weist diese Lichtleiterschicht an einer ihrer Stirnseiten zumindest eine Lichteinkoppelfläche auf, insbesondere in die Licht einer Lichtquelle in die Lichtleiterschicht eingestrahlt wird. Dabei ist es möglich, dass diese Lichtquelle so angeordnet ist, dass diese in Blickrichtung nicht unterhalb der Dekorfolie, sondern beispielsweise seitlich dazu versetzt angeordnet ist. Weiter ist es sinnvoll, wenn die Lichtleiterschicht zumindest flächenbereichsweise an ihrer zu der transparenten Laserschutzlackschicht weisenden Oberfläche zumindest eine Lichtauskoppelfläche aufweist, die beispielsweise eine Oberflächenstrukturierung aufweist. Hierbei ist es möglich, dass die zumindest eine Lichtauskoppelfläche derart ausgestaltet ist, dass bevorzugt über die zumindest eine Lichtauskoppelfläche verteilt gleichmäßig diffus streuendes Licht ausgekoppelt wird.

Weiter ist es hierbei zweckmäßig, wenn in das Material der zweiten Farblackschicht, welche in der Ausführung als Lichtleiterschicht beispielsweise aus Polycarbonat oder PVC besteht, alternativ oder zusätzlich zu einer Oberflächenstrukturierung zumindest im Bereich der zumindest einen Lichtauskoppelfläche ein fluoreszierender Farbstoff, bevorzugt in Form von Farbstoffpartikeln, eingelagert ist. So ist es möglich, dass die zweite Farblackschicht insbesondere im Bereich der zumindest einen Lichtauskoppelfläche einen fluoreszierenden Farbstoff, bevorzugt in Form von Farbstoffpartikeln, aufweist. Insbesondere bei Einstrahlung von Licht in die Lichtleiterschicht werden die Farbstoffpartikel zur Fluoreszenz angeregt und strahlen isotrop, also auch in Richtung der Lichtleiterschicht, Fluoreszenzlicht ab bzw. aus. So ist hierbei möglich, die Farbe des ausgekoppelten Lichts bei eingeschalteter Lichtquelle in Abhängigkeit des fluoreszierenden Farbstoffs in dem Kunststoffmaterial festzulegen.

Hierbei ist es möglich, dass die zweite Farblackschicht in der Ausführung als Lichtleiterschicht insbesondere als eine selbsttragende, trockene Schicht ausgestaltet ist, die beispielsweise mittels Verkleben oder Lamination oder ähnlichen Verfahren aufgebracht wird. Weiter ist es auch möglich, dass die zweite Farblackschicht in der Ausführung als Lichtleiterschicht mittels eines Nassverfahrens gedruckt oder gegossenen wird.

Erfindungsgemäß umfasst die Dekorfolie eine Schutzlackschicht, wobei die Schutzlackschicht auf der einem Betrachter zugewandten Seite der Dekorfolie angeordnet ist.

So ergibt sich, dass die Schutzlackschicht die zu einem Betrachter weisende Schicht bildet und/oder dass die Schutzlackschicht in Betrachtungsrichtung oberhalb der zumindest einen ersten Farblackschicht, der zumindest einen zweiten Farblackschicht und der transparenten Laserschutzlackschicht liegt bzw. angeordnet ist. In anderen Worten ist die Schutzlackschicht auf der der transparenten Laserschutzlackschicht abgewandten Seite der zumindest einen ersten Farblackschicht angeordnet
Vorzugsweise bedeckt die Schutzlackschicht bei Betrachtungsrichtung senkrecht zu einer von der zumindest einen ersten Farblackschicht, der zumindest einen zweiten Farblackschicht und/oder der transparenten Laserschutzlackschicht aufgespannten Ebene die zumindest eine erste Farblackschicht bereichsweise oder vollständig.

Vorteilhafterweise schützt die Schutzlackschicht die in Betrachtungsrichtung unterhalb der Schutzlackschicht angeordneten Schichten vor mechanischen, physikalischen und/oder chemischen Umwelteinflüssen, insbesondere zumindest in denjenigen Bereichen, in welchen die Schutzlackschicht nicht entfernt ist.

Zweckmäßigerweise ist die Schutzlackschicht transparent ausgebildet und/oder weist die Schutzlackschicht eine Transmission, insbesondere im Wellenlängenbereich zwischen 380 nm bis 780 nm, von mindestens 25 %, bevorzugt von mindestens 35 %, weiter bevorzugt von mindestens 85 %, auf.

Es ist möglich, dass die Schutzlackschicht eine Schichtdicke zwischen 0,5 µm und 50 µm, bevorzugt zwischen 4,0 µm und 4,5 µm, aufweist.

Weiter ist es zweckdienlich, wenn die Schutzlackschichtaus Monomeren, Oligomeren, Polymeren und/oder Copolymeren ausgebildet ist, bevorzugt umfassend Polymethylmethacrylat (PMMA), Polyester, Polycarbonat (PC), Polyamid (PA), Polyurethane (PU) und/oder Polyvinylchlorid (PVC), weiter bevorzugt umfassend PU und/oder PVC, und/oder wenn die Schutzlackschicht Polyacrylat als Bindemittel aufweist.

Weiter ist es auch möglich, dass die Schutzlackschicht Polyetherimide (PEI) und/oder Polysulfone, wie beispielsweise Poly(arylethersulfon)e (PAES), aufweist.

Weiter ist es auch möglich, dass die Schutzlackschicht thermisch und/oder durch energiereiche Strahlung aushärtet bzw. ausgehärtet ist/wird. Bevorzugt erfolgt die Härtung vor und/oder nach der Verarbeitung der Dekorfolie und/oder Applikation der Dekorfolie auf ein Substrat.

Weiter ist es auch möglich, dass die Schutzlackschicht eingefärbt ist, insbesondere dass die Schutzlackschicht mittels Farbstoffen und/oder Farbpigmenten eingefärbt ist. Vorzugsweise beträgt der Pigmentierungsgrad der Schutzlackschicht weniger als 15 %, bevorzugt weniger als 10 %, weiter bevorzugt weniger als 5 %.

Es ist jedoch auch möglich, dass die Schutzlackschicht farblos ist und/oder klar transparent ist und/oder dass der Pigmentierungsgrad der Schutzlackschicht 0 % beträgt.

So ist es möglich, dass die Schutzlackschicht eine, insbesondere unpigmentierte, Klarlackschicht ist bzw. ausbildet.

Vorzugsweise ist die Schutzlackschicht klar, insbesondere lenkt die Schutzlackschicht transmittiertes Licht, insbesondere Licht im Wellenlängenbereich zwischen 380 nm und 780 nm, um weniger als 8 %, bevorzugt um weniger als 4 %, durch Streuung ab.

In den ein oder mehreren ersten Bereichen ist weiter die in Betrachtungsrichtung oberhalb der zumindest einen ersten Farblackschicht angeordnete Schutzlackschicht vollständig entfernt. Es ist möglich, dass in den ein oder mehreren ersten Bereichen unterhalb der Schutzlackschicht angeordnete Schichten, insbesondere die transparente Laserschutzlackschicht und/oder die zumindest eine erste Farblackschicht, nicht mehr vor chemischen, physikalischen und/oder mechanischen Umwelteinflüssen geschützt sind.

Ferner ist es zweckmäßig, wenn die Dekorfolie weiter eine Kleberschicht umfasst, insbesondere wobei die Kleberschicht die einem Betrachter zugewandte oder die einem Betrachter abgewandte Seite der Dekorfolie bildet.

Es ist jedoch auch denkbar, dass die Dekorfolie zumindest eine Kleberschicht umfasst, insbesondere dass die Dekorfolie zwei oder mehrere Kleberschichten umfasst, welche bevorzugt sich gegenüberliegende Oberflächen der Dekorfolie ausbilden.

So ist es möglich, dass die Kleberschicht die zu einem Betrachter weisende und/oder die von einem Betrachter wegweisende Schicht bzw. Oberfläche der Dekorfolie bildet und/oder in Betrachtungsrichtung oberhalb der zumindest einen ersten Farblackschicht, der zumindest einen zweiten Farblackschicht und/oder der transparenten Laserschutzlackschicht liegt bzw. angeordnet ist und/oder dass die Kleberschicht in Betrachtungsrichtung unterhalb der zumindest einen ersten Farblackschicht, der zumindest einen zweiten Farblackschicht und/oder der transparenten Laserschutzlackschicht liegt bzw. angeordnet ist.

Vorzugsweise bedeckt die Kleberschicht bei Betrachtungsrichtung senkrecht zu einer von der zumindest einen ersten Farblackschicht, der zumindest einen zweiten Farblackschicht und/oder der transparenten Laserschutzlackschicht aufgespannten Ebene die zumindest eine erste Farblackschicht und/oder die zumindest eine zweite Farblackschicht bereichsweise oder vollständig.

Hierdurch wird es möglich, dass die Dekorfolie auf ein Kunststoffformteil aufgebracht, insbesondere fest aufgebracht, werden kann, insbesondere derart aufgebracht werden kann, dass die Dekorfolie mit dem Kunststoffformteil fest verbunden ist.

Unter dem Begriff fest verbunden wird hierbei bevorzugt eine beständige Verbindung von zwei Elementen verstanden, so dass sich diese nicht mehr mechanisch trennen lassen ohne zumindest eines der Elemente zu beschädigen. So ist beispielsweise die Dekorfolie und ein Kunststoffformteil fest verbunden, wenn zwischen diesen beiden Elementen eine beständige Verbindung besteht und sich die Dekorfolie und/oder das Kunststoffformteil nicht trennen lassen ohne eines der beiden Elemente zu beschädigen.

Zweckmäßigerweise weist die Kleberschicht eine Schichtdicke zwischen 0,1 µm und 50 µm, bevorzugt zwischen 0,5 µm und 7 µm, weiter bevorzugt zwischen 2,5 µm und 3,0 µm, auf.

Bevorzugt ist die Kleberschicht transparent ausgebildet und/oder weist die Kleberschicht eine Transmission, insbesondere im Wellenlängenbereich zwischen 380 nm bis 780 nm, von mindestens 45 %, bevorzugt von mindestens 65 %, weiter bevorzugt von mindestens 95 %, auf.

Vorzugsweise besteht die Kleberschicht aus einem Material, das nach Applikation auf das Kunststoffformteil klar transparent ist, insbesondere besteht die Kleberschicht aus einem Material, dass nach Applikation auf das Kunststoffformteil Licht im Wellenlängenbereich zwischen 380 nm und 780 nm, um weniger als 8 %, bevorzugt um weniger als 4 %, durch Streuung ablenkt.

Weiter ist es von Vorteil, wenn die Kleberschicht eine Schicht aus Polymeren und/oder Copolymeren, insbesondere umfassend PMMA, Polyester, PU oder PVC, ist und/oder wenn die Kleberschicht Acrylat als Bindemittel aufweist.

Auch ist es denkbar, dass die Kleberschicht eingefärbt ist, insbesondere dass die Kleberschicht mittels Farbstoffen und/oder Farbpigmenten eingefärbt ist. Bevorzugt beträgt der Pigmentierungsgrad der Kleberschicht zwischen 5 % und 50 %, bevorzugt zwischen 30 % und 35 %.

Es ist jedoch auch denkbar, dass die Kleberschicht farblos ist und/oder klar transparent ist und/oder dass der Pigmentierungsgrad der Kleberschicht 0 % beträgt.

Erfindungsgemäß weist die Dekorfolie ein oder mehrere elektrische Funktionsschichten mit mindestens einer elektrischen Funktionsstruktur auf, wobei die mindestens eine elektrische Funktionsstruktur ein Touchsensorfeld ausbildet, welches eine Tastfeldfunktionalität bereitstellt.

Unter Touchsensorfeld wird hierbei insbesondere ein berührungsempfindlicher Sensor verstanden, der die Steuerung eines elektrischen Funktionselements, beispielsweise eines PDAs oder eines mit einem Symbol oder Schriftzug gekennzeichneten Bedienelements beispielsweise eines KFZs, ermöglicht. Ebenfalls wird unter einem Touchsensorfeld insbesondere ein Multitouchsensorfeld verstanden, welches mehrere gleichzeitige Berührungen verarbeiten kann.

Hierbei ist es möglich, dass die mindestens eine elektrische Funktionsstruktur ein kapazitives Sensorfeld ausbildet.

Es ist jedoch auch möglich, dass die mindestens eine elektrische Funktionsstruktur ein resistives oder induktives Sensorfeld ausbildet.

Weiter ist es von Vorteil, wenn die mindestens eine elektrische Funktionsstruktur zusätzlich noch weitere Funktionselemente aufweist, wie beispielsweise elektrische Zuleitungen, elektrische und/oder elektronische Bauelemente, wie beispielsweise integrierte Schaltkreise.

Auch ist es denkbar, dass die mindestens eine elektrische Funktionsstruktur einlagig oder auch mehrlagig ausgebildet ist. Weiter ist es möglich, wenn die mindestens eine elektrische Funktionsstruktur zumindest bereichsweise eine Verstärkungsschicht, welche beispielsweise mittels Aufgalvanisierung und/oder mittels Bedruckung mit Metallpigmentschichten und/oder anderen leitfähigen Schichten wie beispielsweise Karbon aufgebracht wird, aufweist.

So ist es möglich, dass die Dekorfolie ein Touchsensor ausbildet und/oder dass die Dekorfolie ein Touchsensor ist.

Weiter ist es auch von Vorteil, wenn alle in Betrachtungsrichtung unterhalb der transparenten Laserschutzlackschicht angeordneten Schichten transparent sind, insbesondere wenn alle unterhalb der transparenten Laserschutzlackschicht angeordneten Schichten eine Transmission von mindestens 25 %, bevorzugt von mindestens 45 %, aufweisen.

Im Folgenden sind insbesondere weiter bevorzugte Ausgestaltungen des Verfahrens zum Dekorieren eines Kunststoffformteils beschrieben:
Erfindungsgemäß wird in dem Schritt b) die Dekorfolie derart auf das Kunststoffformteil aufgebracht, dass die zumindest eine erste Farblackschicht die dem Betrachter zugewandte Seite ausbildet und die zumindest eine zweite Farblackschicht die dem Betrachter abgewandte Seite ausbildet.

Weiter ist es möglich, dass in dem Schritt b) die Dekorfolie mittels Transferverfahren, insbesondere Heiß- und/oder Kalttransferverfahren, wie beispielsweise Heißprägen, In-Mould-Decoration, Insert-Moulding, Print-Mould-Design, In-Mould-Labeling, Laminieren und/oder Aufkleben, aufgebracht wird.

Weiter ist es von Vorteil, dass in dem Schritt c) die zumindest eine erste Farblackschicht erfindungsgemäß in den ein oder mehreren ersten Bereichen mittels des Lasers derart entfernt wird, dass die transparente Laserschutzlackschicht freigelegt wird.

Weiter ist es bevorzugt, wenn in dem Schritt c) die zumindest eine erste Farblackschicht in den ein oder mehreren ersten Bereichen mittels eines Lasers derart entfernt wird, dass die Schichtdicke der transparenten Laserschutzlackschicht in den ein oder mehreren ersten Bereichen, in welchen die zumindest eine erste Farblackschicht mittels des Lasers entfernt wurde im Wesentlichen der Schichtdicke der transparenten Laserschutzlackschicht in denjenigen Bereichen entspricht, in welchen die zumindest eine erste Farblackschicht nicht mittels des Lasers entfernt wurde. Insbesondere ist hierbei eine eventuelle leichte oberflächliche Verletzung der transparenten Laserschutzlackschicht hinnehmbar, vorzugsweise solange dabei die Gesamtdicke der transparenten Laserschutzlackschicht um nicht mehr als 50 %, bevorzugt um nicht mehr als 30 %, verringert wird. Hierdurch ist insbesondere im Endprodukt sichergestellt, dass die transparente Laserschutzlackschicht zum einen Ihre Schutzfunktion gegenüber Umwelteinflüssen für die darunterliegenden Schichten erfüllt und zum anderen, dass die transparente Laserschutzlackschicht auch ihre Funktion als Abstands- bzw. Pufferschicht erfüllt bzw. erfüllt hat.

Vorteilhafterweise wird in dem Schritt c) in den ein oder mehreren ersten Bereichen die zumindest eine erste Farblackschicht vollständig entfernt.

Erfindungsgemäß wird in dem Schritt c) die in Betrachtungsrichtung oberhalb der transparenten Laserschutzlackschicht und oberhalb der zumindest einen ersten Farblackschicht angeordnete Schutzlackschicht der Dekorfolie vollständig entfernt.

Weiter ist es denkbar, dass in dem Schritt c) eine in Betrachtungsrichtung oberhalb der zumindest einen ersten Farblackschicht angeordnete Schutzlackschicht mittels des Lasers in den ein oder mehreren ersten Bereichen derart entfernt wird, dass in den ein oder mehreren ersten Bereichen unterhalb der Schutzlackschicht angeordnete Schichten, insbesondere die transparente Laserschutzlackschicht und/oder die zumindest eine erste Farblackschicht, nicht mehr vor chemischen, physikalischen und/oder mechanischen Umwelteinflüssen geschützt werden.

So ist es auch möglich, dass in dem Schritt c) eine in Betrachtungsrichtung oberhalb der zumindest einen ersten Farblackschicht angeordnete Schutzlackschicht mittels des Lasers in den ein oder mehreren ersten Bereichen derart entfernt wird, dass diese ihre Funktion die unterhalb der Schutzlackschicht liegenden Schichten vor mechanischen, physikalischen und chemischen Einflüssen zu schützen im Wesentlichen nicht mehr erfüllt.

Ferner ist es auch möglich, wenn in dem Schritt c) in den ein oder mehreren ersten Bereichen alle in Betrachtungsrichtung oberhalb der transparenten Laserschutzlackschicht angeordneten Schichten entfernt, insbesondere vollständig entfernt, werden.

Erfindungsgemäß umfasst das Verfahren weiter folgenden Schritt, insbesondere der zwischen Schritt a) und b) durchgeführt wird: d) Anordnen ein oder mehrerer elektrischer Funktionsschichten mit mindestens einer elektrischen Funktionsstruktur auf der dem Betrachter abgewandten Seite der zumindest einen zweiten Farblackschicht, wobei die mindestens eine elektrische Funktionsstruktur ein Touchsensorfeld ausbildet, welches eine Tastfeldfunktionalität bereitstellt.

Weiter ist es von Vorteil, wenn die mindestens eine elektrische Funktionsstruktur zusätzlich noch weitere Funktionselemente aufweist, wie beispielsweise elektrische Zuleitungen, elektrische und/oder elektronische Bauelemente, wie beispielsweise integrierte Schaltkreise.

Auch ist es denkbar, dass die mindestens eine elektrische Funktionsstruktur einlagig oder auch mehrlagig ausgebildet ist. Weiter ist es möglich, wenn die mindestens eine elektrische Funktionsstruktur zumindest bereichsweise eine Verstärkungsschicht, welche beispielsweise mittels Aufgalvanisierung und/oder mittels Bedruckung mit Metallpigmentschichten und/oder anderen leitfähigen Schichten wie beispielsweise Karbon aufgebracht wird, aufweist.

Vorzugsweise werden die ein oder mehreren elektrischen Funktionsschichten mit mindestens einer elektrischen Funktionsstruktur zwischen der Dekorfolie und dem Kunststoffformteil angeordnet. So ist es möglich, dass die ein oder mehreren elektrischen Funktionsschichten auf der der transparenten Laserschutzlackschicht abgewandten Seite der zumindest einen zweiten Farblackschicht angeordnet sind.

So ist es möglich, dass das Kunststoffformteil, insbesondere das mit der Dekorfolie dekorierte Kunststoffformteil, ein Touchsensor ausbildet und/oder ist.

Weiter ist von Vorteil, wenn die in dem Schritt d) angeordneten ein oder mehreren elektrischen Funktionsschichten mit mindestens einer elektrischen Funktionsstruktur in dem Schritt b) fest mit der Dekorfolie und dem Kunststoffformteil verbunden werden.

Bevorzugt umfasst das Verfahren weiter folgenden Schritt: e) Anordnen einer Hinterleuchtungsvorrichtung, insbesondere umfassend organische Leuchtdioden (OLED), anorganische Leuchtdioden (LED), MikroLEDs (mLED) und/oder Quantenpunkt-Leuchtdioden (QLED), wobei die Hinterleuchtungsvorrichtung bevorzugt auf der von der Dekorfolie abgewandten Seite des Kunststoffformteils angeordnet wird.

Es ist jedoch auch möglich, dass die Hinterleuchtungsvorrichtung Glühlampen, Halogenlampen, Gasentladungslampen und/oder Leuchtstofflampen, insbesondere Induktionslampen, umfasst.

Weniger bevorzugt umfasst die Hinterleuchtungsvorrichtung Laser und/oder chemisch-physikalische Leuchtmittel, wie beispielsweise Leuchtfarben oder Knicklichter.

Zweckmäßigerweise wird in dem Schritt e) die Hinterleuchtungsvorrichtung fest angebracht, insbesondere geklebt oder laminiert oder auch mechanisch befestigt, beispielweise geschraubt oder genietet.

Es ist weiter auch möglich, dass in dem Schritt c) ein Laser mit einem Strahldurchmesser im Fokuspunkt von mindestens 50 µm, bevorzugt mindestens 100 µm, verwendet wird.

Auch ist es möglich, den Laserstrahl mittels ein oder mehreren Linsen, insbesondere mit einer Brennweite zwischen 100 mm und 500 mm, bevorzugt zwischen 200 mm und 300 mm, weiter bevorzugt von 254 mm, zu fokussieren.

Weiter ist es bevorzugt, wenn in dem Schritt c) ein Laser, insbesondere Faserlaser, verwendet wird, wobei der Laser kohärentes Licht aus dem Infrarotbereich, bevorzugt dem nahen Infrarotbereich, weiter bevorzugt Licht aus dem Wellenlängenbereich zwischen 780 nm und 1400 nm, noch weiter bevorzugt Licht der Wellenlänge 1064 nm, emittiert.

Vorzugsweise beträgt in dem Schritt c) die Laserleistung zwischen 0,05 W und 100 W, bevorzugt zwischen 1 W und 20 W, weiter bevorzugt zwischen 5 W und 10 W.

Es ist zweckmäßig, wenn in dem Schritt c) der Laserstrahl mittels auslenkbarer Spiegel, insbesondere mittels eines Laser-Scan-Moduls, entlang der ein oder mehreren ersten Bereiche gelenkt wird.

Gemäß einem weiteren Ausführungsbeispiel der Erfindung wird der Laser mit einer Schreibgeschwindigkeit von maximal 3000 mm/s, bevorzugt mit einer Schreibgeschwindigkeit zwischen 500 mm/s und 2500 mm/s, betrieben und/oder wird der Laser mit einer Pulsfrequenz zwischen 1 Hz und 1000 kHz, bevorzugt zwischen 1 kHz und 200 kHz, betrieben.

Weiter ist es jedoch auch möglich, dass der Laser kontinuierlich betrieben wird.

Ferner ist es auch möglich, dass in dem Schritt b) die Dekorfolie mittels Hinterspritzen auf das Kunststoffformteil aufgebracht wird. Hierbei ist es sinnvoll, wenn das Verfahren weiter folgende Schritte umfasst:
- Einlegen der Dekorfolie in eine Spritzgussform
- Hinterspritzen der Dekorfolie mit einer Kunststoffmasse derart, dass sich die Dekorfolie fest mit der Kunststoffmasse verbindet und insbesondere dass die Dekorfolie eine erste Oberfläche des Kunststoffformteils ausbildet. Bevorzugt bildet hierbei die ausgehärtete Kunststoffmasse das Kunststoffformteil aus.

Weiter ist es möglich, dass insbesondere nach den Schritten a), b), c), d) und/oder e) weitere Schritte insbesondere zur Weiterbearbeitung des Kunststoffformteils, durchgeführt werden. So es beispielsweise möglich, dass das Kunststoffformteil, insbesondere das mit der Dekorfolie dekorierte Kunststoffformteil, mit einem der weiteren Schritte ausgewählt aus: Lackieren mit weiteren Schichten, PU-Überfluten, Überspritzen oder Überziehen mit einer weiteren Kunststoffkomponente, Fräsen, Stanzen, Tiefziehen, Polieren und/oder Prägen, weiter bearbeitet wird.

Im Folgenden sind unter anderem insbesondere weiter bevorzugte Ausgestaltungen des Kunststoffformteils beschrieben:
Gemäß einem weiteren Ausführungsbeispiel der Erfindung weisen die ein oder mehreren ersten Bereiche bei Betrachtung senkrecht auf die Dekorfolie eine Linienstärke von mindestens 50 µm, bevorzugt von mindestens 100 µm, auf und/oder weisen die ein oder mehreren ersten Bereiche bei Betrachtung senkrecht auf die Dekorfolie eine Linienstärke von maximal 2 mm, bevorzugt von maximal 1 mm, weiter bevorzugt von maximal 0,5 mm, auf.

Auch ist es möglich, dass das Kunststoffformteil eine Schichtdicke zwischen 0,5 mm bis 10 mm, bevorzugt zwischen 0,8 mm und 5 mm, aufweist.

Weiter ist es von Vorteil, dass das Kunststoffformteil zumindest eine Schicht aus einem thermoplastischen Material aufweist, welche insbesondere auf der dem Betrachter abgewandten Seite der zumindest einen zweiten Farblackschicht angeordnet ist.

So ist es möglich, dass die zumindest eine Schicht aus einem thermoplastischen Material auf der dem Betrachter abgewandten zumindest einen zweiten Farblackschicht angeordnet ist.

Auch ist es möglich, dass das Kunststoffformteil folgenden Schichtaufbau aufweist, insbesondere wobei die zuerst genannte Schicht die dem Betrachter abgewandte Seite bildet:
- zumindest eine Schicht aus einem thermoplastischen Material
- optional eine Kleberschicht
- die zumindest eine zweite Farblackschicht
- die transparente Laserschutzlackschicht
- die zumindest eine erste Farblackschicht
- die Schutzlackschicht

Vorzugsweise ist die zumindest eine Schicht aus einem thermoplastischen Material transparent, insbesondere weist die zumindest eine Schicht aus einem thermoplastischen Material eine Transparenz zwischen 5 % und 98 %, insbesondere im Wellenlängenbereich zwischen 380 nm bis 780 nm, auf und/oder ist die zumindest eine Schicht aus einem thermoplastischen Material gebildet aus einem der folgenden Materialien: ABS, PC, ABS/PC, PC/ABS, PMMA, Polypropylen (PP), PA, thermoplastisches Polyurethan (TPU). Hierdurch wird es ermöglicht, eine gute Hinterleuchtung des Kunststoffformteils sicherzustellen.

Insbesondere durch die Kombination bzw. Variation der Transparenzwerte und/oder der Licht streuenden Eigenschaften der zumindest einen ersten Farblackschicht, der zumindest einen zweiten Farblackschicht und/oder der transparenten Laserschutzlackschicht, bevorzugt in Kombination mit der Ausgestaltung der ein oder mehreren ersten Bereiche, lassen sich sehr unterschiedliche optische Eigenschaften erzielen.

Beispielsweise ist es möglich, dass die zumindest eine erste Farblackschicht opak ausgeführt ist und die ein oder mehreren ersten Bereiche bei Betrachtung senkrecht auf die Dekorfolie eine Linienstärke von maximal 2 mm, bevorzugt von maximal 1 mm, weiter bevorzugt von maximal 0,5 mm, aufweisen. Ist beispielsweise neben der transparenten Laserschutzlackschicht auch die zumindest eine zweite Farblackschicht transparent ausgeführt und weisen beide Schichten bevorzugt eine Transmission von beispielsweise mehr 45 %, weiter bevorzugt von mehr als 65 %, auf und ist zumindest eine dieser Schichten weiter auch diffus streuend ausgebildet, so wird bei einem Betrachter, insbesondere bei Betrachtung des Kunststoffformteil von der der zumindest einen Schicht aus einem thermoplastischen Material abgewandten Seite her und/oder von der Seite der zumindest einen ersten Farblackschicht her, der der optische Eindruck erzeugt, dass das Kunststoffformteil opak ist, wenn die Hinterleuchtung deaktiviert ist. Wird beispielsweise ein derartiges Kunststoffformteil hinterleuchtet, sind für den Betrachter die ein oder mehreren ersten Bereiche jedoch erkennbar und erscheinen weiter auch aufgrund der diffus streuenden Eigenschaften der transparenten Laserschutzlackschicht und/oder der zumindest einen zweiten Farblackschicht homogen hinterleuchtet. Insbesondere wird ein derartiger optischer Effekt auch als "Dead-Front-Effekt" bezeichnet, da die durch die ein oder mehreren ersten Bereiche ausgebildeten Dekorelemente, wie beispielsweise Symbole oder Muster oder Schriftzüge, erst bei Hinterleuchtung sichtbar werden.

Daher ist es beispielsweise möglich, mittels des Kontrastes zwischen den entfernten ein oder mehreren ersten Bereichen und den nicht entfernten Bereichen der zumindest einen ersten Farblackschicht die Sichtbarkeit der ein oder mehreren ersten Bereiche für einen Betrachter einzustellen bzw. zu steuern.

Bevorzugt weist die zumindest eine erste Farblackschicht einen Unterschied in der Transmission von mindestens 5 %, weiter bevorzugt von mindestens 10 % bis 95 %, noch weiter bevorzugt von mindestens 15 % bis 85 %, zwischen den ein oder mehreren ersten Bereichen, in welchen die zumindest eine erste Farblackschicht entfernt ist, und denjenigen Bereichen, in welchen die zumindest eine erste Farblackschicht nicht entfernt ist, auf.

Weiter ist es daher auch möglich, mittels der Transparenzwerte der zumindest einen zweiten Farblackschicht und/oder der transparenten Laserschutzlackschicht und/oder der zumindest einen Schicht aus einem thermoplastischen Material die Sichtbarkeit der ein oder mehreren ersten Bereiche für einen Betrachter einzustellen bzw. zu steuern. So führt beispielsweise eine Verringerung der Transparenzwerte dieser Schichten dazu, dass die Sichtbarkeit der ein oder mehreren ersten Bereiche abgeschwächt wird und gleichzeitig der Eindruck einer hohen Opazität der ersten Farblackschicht im nicht hinterleuchteten Zustand erweckt wird. Insbesondere erst im hinterleuchteten Zustand sind dann die ein oder mehreren ersten Bereiche für einen Betrachter erkennbar.

Weiter ist es denkbar, dass die zumindest eine Schicht aus einem thermoplastischen Material eingefärbt ist, insbesondere dass die zumindest eine Schicht aus einem thermoplastischen Material mittels Farbstoffen und/oder Farbpigmenten eingefärbt ist. Vorzugsweise beträgt der Pigmentierungsgrad der zumindest einen Schicht aus einem thermoplastischen Material weniger als 15 %, bevorzugt weniger als 10 %, weiter bevorzugt weniger als 5 %.

Erfindungsgemäß ist weiterhin vorgesehen, dass das Kunststoffformteil ein oder mehrere elektrische Funktionsschichten mit mindestens einer elektrischen Funktionsstruktur auf der dem Betrachter abgewandten zumindest einen zweiten Farblackschicht aufweist, wobei die mindestens eine elektrische Funktionsstruktur ein Touchsensorfeld ausbildet, welches eine Tastfeldfunktionalität bereitstellt.

Weiter ist es von Vorteil, wenn die mindestens eine elektrische Funktionsstruktur zusätzlich noch weitere Funktionselemente aufweist, wie beispielsweise elektrische Zuleitungen, elektrische und/oder elektronische Bauelemente, wie beispielsweise integrierte Schaltkreise.

Auch ist es denkbar, dass die mindestens eine elektrische Funktionsstruktur einlagig oder auch mehrlagig ausgebildet ist. Weiter ist es möglich, wenn die mindestens eine elektrische Funktionsstruktur zumindest bereichsweise eine Verstärkungsschicht, welche beispielsweise mittels Aufgalvanisierung und/oder mittels Bedruckung mit Metallpigmentschichten und/oder anderen leitfähigen Schichten wie beispielsweise Karbon aufgebracht wird, aufweist.

Vorzugsweise sind die ein oder mehreren elektrischen Funktionsschichten mit mindestens einer elektrischen Funktionsstruktur zwischen der Dekorfolie und der zumindest einen Schicht aus thermoplastischen Material angeordnet. So ist es möglich, dass die ein oder mehreren elektrischen Funktionsschichten auf der der transparenten Laserschutzlackschicht abgewandten Seite der zumindest einen zweiten Farblackschicht angeordnet sind.

Gemäß einem weiteren Ausführungsbeispiel der Erfindung weist das Kunststoffformteil eine Hinterleuchtungsvorrichtung, insbesondere umfassend organische Leuchtdioden (OLED), anorganische Leuchtdioden (LED),MikroLEDs (mLED) und/oder Quantenpunkt-Leuchtdioden (QLED), auf, wobei die Hinterleuchtungsvorrichtung bevorzugt auf der von der Dekorfolie abgewandten Seite der zumindest einen Schicht aus thermoplastischen Material angeordnet ist.

Im Folgenden werden Ausführungsbeispiele der Erfindung exemplarisch unter Zuhilfenahme der beiliegenden, nicht maßstabgetreuen Figuren erläutert.
- Fig. 1a bis Fig. 1g: zeigen schematisch Schnittdarstellungen von Dekorfolien
- Fig. 2: zeigt schematisch eine diffus streuende Schicht
- Fig. 3: zeigt schematisch eine Schnittdarstellung einer Transferfolie
- Fig. 4a bis Fig. 4d: zeigen schematisch Verfahrensschritte zur Herstellung einer Transferfolie
- Fig. 5a bis Fig. 5c: zeigen schematisch Verfahrensschritte zur Dekoration eines Kunststoffformteils
- Fig. 6a bis Fig. 6c: zeigen schematisch Verfahrensschritte zur Dekoration eines Kunststoffformteils
- Fig. 7: zeigt schematisch einen Verfahrensschritt
- Fig. 8a bis Fig.8e: zeigen schematisch Schnittdarstellungen eines Kunststoffformteils
- Fig. 9: zeigt schematisch eine Draufsicht auf eine Dekorfolie und/oder auf ein Kunststoffformteil

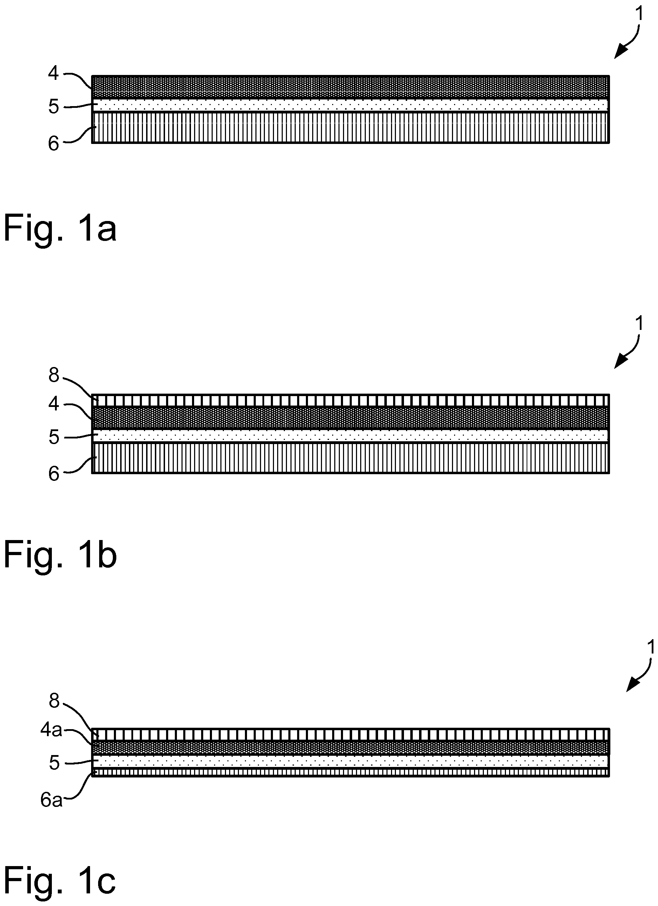

Fig. 1a bis Fig. 1g zeigen schematisch Schnittdarstellungen von Dekorfolien 1.

Die in Fig. 1a gezeigte Dekorfolie 1, insbesondere zur Dekoration eines Kunststoffformteils, umfasst eine Farblackschicht 4, eine Farblackschicht 6 und eine transparente Laserschutzlackschicht 5, wobei die transparente Laserschutzlackschicht 5 zwischen der Farblackschicht 4 und der Farblackschicht 6 angeordnet ist.

Hier und im Folgenden handelt es sich insbesondere bei der Farblackschicht 4 um die erste Farblackschicht und bei der Farblackschicht 6 um die zweite Farblackschicht im obigen Sinne. So stellt insbesondere die Farblackschicht 4 die erste Farblackschicht und die Farblackschicht 6 die zweite Farblackschicht gemäß obigen Ausführungen dar.

Erfindungsgemäß ist daher vorgesehen, dass die Farblackschicht 4 auf der einem Betrachter zugewandten Seite der transparenten Laserschutzlackschicht 5 angeordnet und die Farblackschicht 6 auf der dem Betrachter abgewandten Seite der transparenten Laserschutzlackschicht 5 angeordnet ist. So ist vorgesehen, dass die Farblackschicht 4 die einem Betrachter zugewandte Seite bildet. So ist auch vorgesehen, dass die Farblackschicht 6 in Betrachtungsrichtung unterhalb der transparenten Laserschutzlackschicht 5 und unterhalb der Farblackschicht 4 angeordnet ist.

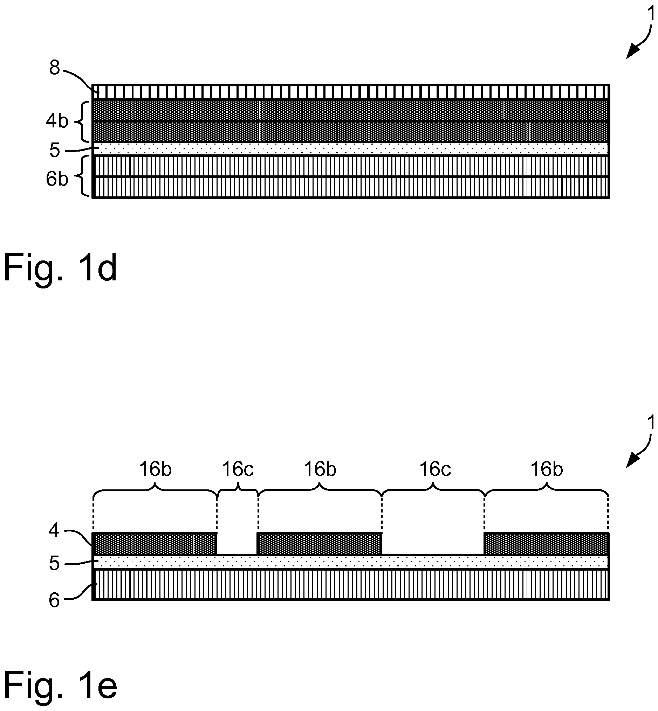

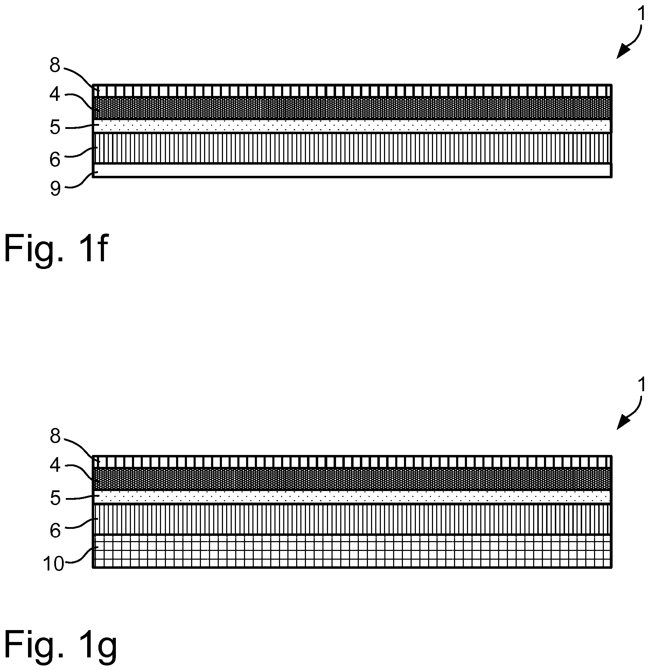

Vorzugsweise wird unter einer transparenten Laserschutzlackschicht 5 eine transparente Schutzlackschicht, insbesondere transparente Zwischenschutzlackschicht verstanden, welche die Farblackschicht 6, insbesondere die von einem Betrachter aus gesehen unterhalb der transparenten Zwischenschutzlackschicht liegenden Schichten, vor mechanischen, physikalischen und/oder chemischen Umwelteinflüssen schützt und/oder die derart ausgestaltet ist, dass diese weiter als Abstands- bzw. Pufferschicht für den abtragenden Laser dient. So handelt es sich beispielsweise bei der in Fig. 1 gezeigten transparenten Laserschutzlackschicht 5 um eine transparente Schutzlackschicht, insbesondere um eine transparente Zwischenschutzlackschicht.

Die transparente Laserschutzlackschicht 5 weist vorzugsweise eine Schichtdicke zwischen 0,5 µm und 50 µm, bevorzugt zwischen 2,0 µm und 2,5 µm, auf. Die in Fig. 1a gezeigte transparente Laserschutzlackschicht 5 weist beispielsweise eine Schichtdicke zwischen 2,0 µm und 2,5 µm auf.

Weiter ist es von Vorteil, wenn die transparente Laserschutzlackschicht 5 eine Transmission, insbesondere im Wellenlängenbereich zwischen 380 nm bis 780 nm, von mindestens 25 %, bevorzugt von mindestens 75 %, weiter bevorzugt von mindestens 85 %, aufweist. Die in Fig. 1a gezeigte transparente Laserschutzlackschicht weist beispielsweise eine Transmission von mindestens 75 %, bevorzugt von mindestens 85 %, auf.

Weiter ist es auch denkbar, dass die transparente Laserschutzlackschicht 5 eine Transmission im Infrarotbereich, bevorzugt dem nahen Infrarotbereich, weiter bevorzugt im Wellenlängenbereich zwischen 780 nm und 1400 nm, noch weiter bevorzugt für Licht der Wellenlänge von 1064 nm, von mindestens 25 %, bevorzugt von mindestens 75 %, weiter bevorzugt von mindestens 85 % aufweist.

Weiter ist es sinnvoll, wenn die transparente Laserschutzlackschicht 5 hitzebeständig, insbesondere bis zu einer Temperatur von 250 °C, bevorzugt bis 650 °C, weiter bevorzugt bis 1000 °C, ist.

Vorzugsweise streut die transparente Laserschutzlackschicht 5 transmittiertes Licht, insbesondere Licht im Wellenlängenbereich zwischen 380 nm und 780 nm, diffus, und/oder weist die transparente Laserschutzlackschicht 5 einen Haze-Wert von höchstens 50 Haze-Units, bevorzugt von höchstens 20 Haze-Units, auf.

Bevorzugt wird der Haze-Wert in Haze-Units in Transmission nach dem ASTM D 1003 Standard bestimmt. Beispielsweise wird der Haze-Wert mit dem Messgerät "BYK haze-gard i" der Firma Byk-Gardener, Geretsried, Deutschland, gemessen. Hierbei wird vorzugsweise die zu vermessende Schicht oder Folie in den offenen Probenraum des Messgerätes gehalten, und insbesondere für den Haze-Wert an den sogenannten "haze-port" des Gerätes angelegt, wobei die Messung vorteilhafterweise mittels Normlicht D65 durchgeführt wird. Anschließend wird bevorzugt das Ergebnis der Messung am Bildschirm des Messgerätes angezeigt. Der Haze-Wert wird vorteilhafterweise in Prozent (%) angeben. Daher ist es möglich, dass die Einheit des Haze-Wertes in diesem Fall Prozent (%) ist. Der Wertebereich des Haze-Wertes beträgt daher bevorzugt 0-100 %. So ist es möglich, dass es sich bei den Haze-Units um Prozentwerte handelt bzw. dass die Haze-Units Prozentwerte darstellen. Bevorzugt beträgt der Maximalwert 100 %. Gegebenenfalls auftretende höhere Werte als 100 % können beispielsweise, insbesondere in Abhängigkeit des verwendeten Messprinzips, durch zusätzliche Streulichteffekte und/oder Reflektionseffekte während der Messung verursacht werden.

Unter Haze wird hierbei bevorzugt eine diffuse Streuung, insbesondere Großwinkelstreuung, verstanden, welche insbesondere zu einer Abnahme der Abbildungsqualität führt. Als Streuzentren wirken dabei bevorzugt Teilchen oder Inhomogenitäten im Material, an welchen insbesondere das Licht in alle Raumrichtungen gestreut wird, wobei vorteilhafterweise auf jeden Raumwinkel nur eine geringe Streuintensität entfällt. Hierdurch wird insbesondere eine Verminderung des Kontrasts und/oder ein milchig-trübes Erscheinungsbild bewirkt, wobei dieser Effekt vorzugsweise als Haze oder Trübung bezeichnet wird. So stellt der Haze-Wert bevorzugt ein Maß für die Trübung von transparenten Proben, beispielsweise von Kunststoffschichten oder -folien, dar.

Weiter ist es zweckmäßig, dass das Verhältnis des von der transparenten Laserschutzlackschicht 5 aus dem Winkelbereich von weniger als 2,5° aus der Richtung des einfallenden Lichts in Transmission abgelenkten Lichtes im Verhältnis zu dem gesamten von der transparenten Laserschutzlackschicht 5 transmittierten Lichts kleiner als 0,5, bevorzugt kleiner als 0,2, ist. In anderen Worten ist es möglich, dass die transparente Laserschutzlackschicht 5 weniger als 50 %, bevorzugt weniger als 20 %, des transmittierten Lichts, insbesondere aus dem Wellenlängenbereich zwischen 380 nm und 780 nm, um mehr als 2,5° von der Richtung des einfallenden Lichtstrahls ablenkt.

Vorzugsweise weist die transparente Laserschutzlackschicht 5 ein milchig-trübes Erscheinungsbild auf und/oder die transparente Laserschutzlackschicht 5 lenkt mehr als 30 %, bevorzugt mehr als 45 %, weiter bevorzugt mehr als 65 %, des transmittierten Lichts, insbesondere aus dem Wellenlängenbereich zwischen 380 nm und 780 nm, um mehr als 2,5° von der Richtung des einfallenden Lichtstrahls ab. In anderen Worten ist es möglich, dass die transparente Laserschutzlackschicht 5 weniger als 30 %, bevorzugt weniger als 45 %, weiter bevorzugt weniger als 65 %, des transmittierten Lichts, insbesondere aus dem Wellenlängenbereich zwischen 380 nm und 780 nm, um weniger als 2,5° von der Richtung des einfallenden Lichtstrahls ablenkt.

Weiter ist es möglich, dass das Verhältnis des von der transparenten Laserschutzlackschicht 5 aus dem Winkelbereich von weniger als 2,5° aus der Richtung des einfallenden Lichts in Transmission abgelenkten Lichtes im Verhältnis zu dem gesamten von der transparenten Laserschutzlackschicht 5 transmittierten Lichts größer als 0,3, bevorzugt größer als 0,45, weiter bevorzugt größer als 0,65, ist.

Auch ist es möglich, dass die transparente Laserschutzlackschicht 5 eingefärbt ist, insbesondere dass die transparenten Laserschutzlackschicht 5 mittels Farbstoffen und/oder Farbpigmenten eingefärbt ist. Vorzugsweise beträgt der Pigmentierungsgrad der transparenten Laserschutzlackschicht 5 weniger als 15 %, bevorzugt weniger als 10 %, weiter bevorzugt weniger als 5 %.

Es ist jedoch auch möglich, dass die transparente Laserschutzlackschicht 5 farblos ist und/oder klar transparent ist und/oder dass der Pigmentierungsgrad der transparenten Laserschutzlackschicht 5 0 % beträgt. So beträgt der Pigmentierungsgrad der in Fig. 1a gezeigten transparenten Laserschutzlackschicht 5 beispielsweise 0 %, so dass es bei der in Fig. 1a gezeigten transparenten Laserschutzlackschicht 5 insbesondere um eine unpigmentierte Klarlackschicht handelt.

Die transparente Laserschutzlackschicht 5 ist vorzugsweise eine Schicht aus Monomeren, Oligomeren, Polymeren und/oder Copolymeren, welche bevorzugt Polymethylmethacrylat (PMMA), Polyester, Polycarbonat (PC), Polyamid (PA), Polyurethane (PU) und/oder Polyvinylchlorid (PVC), weiter bevorzugt PU und/oder PVC, umfasst. Weiter ist es möglich, dass die transparente Laserschutzlackschicht 5 Polyacrylat als Bindemittel aufweist. So weist beispielsweise die in Fig. 1a gezeigte transparente Laserschutzlackschicht 5 Polyacrylat als Bindemittel auf.

Weiter ist es auch möglich, dass die transparente Laserschutzlackschicht 5 Polyetherimide (PEI) und/oder Polysulfone, wie beispielsweise Poly(arylethersulfon)e (PAES), aufweist.

Weiter ist es auch möglich, dass die transparente Laserschutzlackschicht 5 thermisch und/oder durch energiereiche Strahlung aushärtet bzw. ausgehärtet ist/wird. Bevorzugt erfolgt die Härtung vor und/oder nach der Verarbeitung der Dekorfolie bzw. Transferfolie und/oder Applikation der Dekorfolie bzw. Transferfolie auf ein Substrat.

Vorteilhafterweise schützt die transparente Laserschutzlackschicht 5 die Farblackschicht 6, insbesondere die von einem Betrachter aus gesehen unterhalb der transparenten Laserschutzlackschicht 5 liegenden Schichten, vor mechanischen, physikalischen und/oder chemischen Umwelteinflüssen.

Bei der Farblackschicht 4 handelt es sich bevorzugt um eine Schicht aus Polyethylenterephthalat (PET), PMMA, Polyethylennaphthalat (PEN), PA und/oder Acrylnitril-Butadien-Styrol-Copolymerisat (ABS). Weiter ist es möglich, dass die Farblackschicht 4 Acrylat als Bindemittel auf. So weist beispielsweise die in Fig. 1a gezeigte Farblackschicht 4 Acrylat als Bindemittel auf.

Vorzugsweise weist die Farblackschicht 4 eine Schichtdicke zwischen 0,1 µm und 50 µm, bevorzugt zwischen 0,5 µm und 5,0 µm, auf. Die in Fig. 1a gezeigte Farblackschicht weist beispielsweise eine Schichtdicke zwischen 5,0 µm und 5,5 µm auf.

Ferner ist die Farblackschicht 4 bevorzugt opak ausgebildet und/oder weist vorteilhafterweise eine Transmission, insbesondere im Wellenlängenbereich zwischen 380 nm bis 780 nm, von maximal 50 %, bevorzugt von maximal 20 %, weiter bevorzugt von maximal 5 %, auf. Die in Fig. 1a gezeigte Farblackschicht 4 weist beispielsweise eine Transmission von maximal 5 % auf.

Auch ist es vorteilhaft, wenn die Farblackschicht 4 eingefärbt ist, insbesondere wenn die zumindest eine Farblackschicht 4 mittels Farbstoffen und/oder Farbpigmenten eingefärbt ist. Vorzugsweise beträgt der Pigmentierungsgrad der Farblackschicht 4 zwischen 5 % und 35 %, bevorzugt zwischen 20 % und 25 %. Die in Fig. 1a gezeigte Farblackschicht 4 ist beispielsweise mittels Farbpigmenten eingefärbt und weist weiter beispielsweise einen Pigmentierungsgrad zwischen 5 % und 35 %, bevorzugt zwischen 20 % und 25 %, auf.

Weiter ist es auch möglich, dass die Farblackschicht 4 dunkel, insbesondere schwarz, eingefärbt ist, und/oder dass die Farblackschicht 4 Licht absorbierende Partikel, insbesondere Ruß, aufweist.

Die Farblackschicht 6 ist bevorzugt aus PET, PMMA, PEN, PA und/oder ABS ausgebildet und/oder weist Acrylat als Bindemittel auf. So weist die in Fig. 1a gezeigte Farblackschicht 6 beispielsweise Acrylat als Bindemittel auf.

Ferner weist die Farblackschicht 6 vorzugsweise eine Schichtdicke zwischen 0,1 µm und 50 µm, bevorzugt zwischen 1,0 µm und 5,0 µm, auf. So weist die in Fig. 1a gezeigte Farblacklackschicht 6 beispielsweise eine Schichtdicke zwischen 6,0 µm und 7,0 µm auf.

Erfindungsgemäß weist die Farblackschicht 6 eine Transmission, insbesondere im Wellenlängenbereich zwischen 380 nm bis 780 nm, von mindestens 10 % auf. Weiter ist es von Vorteil, dass die Farblackschicht 6 transparent ausgebildet ist und/oder dass Farblackschicht 6 eine Transmission, insbesondere im Wellenlängenbereich zwischen 380 nm bis 780 nm, von mindestens 25 %, bevorzugt von mindestens 75 %, weiter bevorzugt von mindestens 90 %, aufweist. So weist die in Fig. 1a gezeigte Farblackschicht beispielsweise eine Transmission von mindestens 25 %, bevorzugt von mindestens 45 %, auf.

So ist es vorteilhaft, wenn die Farblackschicht 6 durchleuchtbar, insbesondere mittels eines Hinterleuchtungsmittels durchleuchtbar ist, und/oder wenn die Farblackschicht 6 derart ausgestaltet ist, dass mehr als 10 %, bevorzugt mehr als 25 %, weiter bevorzugt mehr als 75 %, noch weiter bevorzugt mehr als 90 % des Lichts, welches von einem in Betrachtungsrichtung hinter der Farblackschicht 6 angeordneten Hinterleuchtungsmittel abgestrahlt wird, transmittiert wird.

Bevorzugt ist die Farblackschicht 6, wie in Fig. 1a gezeigt, vollflächig ausgebildet, insbesondere nimmt die Farblackschicht 6 die gesamte Fläche bei Betrachtung senkrecht auf die Dekorfolie 1 ein.

Weiter ist es von Vorteil, dass die Farblackschicht 6, insbesondere Licht im Wellenlängenbereich zwischen 380 nm und 780 nm, diffus streut, und/oder dass die Farblackschicht 6 einen Haze-Wert von mindestens 50 Haze-Units, bevorzugt von mindestens 75 Haze-Units, aufweist.

Erfindungsgemäß lenkt die Farblackschicht 6 mehr als 50 % des transmittierten Lichts, insbesondere aus dem Wellenlängenbereich zwischen 380 nm und 780 nm, um mehr als 2,5° von der Richtung des einfallenden Lichtstrahls ab. In anderen Worten lenkt die Farblackschicht 6 weniger als 50 % des transmittierten Lichts, insbesondere aus dem Wellenlängenbereich zwischen 380 nm und 780 nm, um weniger als 2,5° von der Richtung des einfallenden Lichtstrahls ab. Auch ist es vorteilhaft, wenn die Farblackschicht 6 mehr als 75 %, bevorzugt mehr als 85 %, des transmittierten Lichts, insbesondere aus dem Wellenlängenbereich zwischen 380 nm und 780 nm, um mehr als 2,5° von der Richtung des einfallenden Lichtstrahls ablenkt. In anderen Worten ist es möglich, dass die Farblackschicht 6 weniger als 75 %, bevorzugt weniger als 85 %, des transmittierten Lichts, insbesondere aus dem Wellenlängenbereich zwischen 380 nm und 780 nm, um weniger als 2,5° von der Richtung des einfallenden Lichtstrahls ablenkt.

Auch hierdurch wird es möglich, dass durch die Farblackschicht 6 transmittiertes Licht diffus, bevorzugt in einen großen Raumwinkelbereich, bevorzugt in alle Raumrichtungen, gestreut wird, so dass Licht, insbesondere einer Punktlichtquelle, homogen gestreut wird, so dass die Farblackschicht 6 für einen Betrachter, insbesondere trotz Beleuchtung mit einer Punktlichtquelle, homogen beleuchtet erscheint.

So ist es möglich, dass die Farblackschicht 6 eine Diffusorfolie ausbildet und/oder dass die Farblackschicht 6 eine Diffusorfolie ist.

Unter Diffusorfolie wird hier eine insbesondere selbsttragende, trockene Schicht verstanden, die beispielsweise mittels Lamination oder ähnlichen Verfahren aufgebracht werden kann. Eine solche Diffusorfolie stellt bevorzugt eine Alternative zu einer in einem Nassverfahren gedruckten oder gegossenen zweiten Farblackschicht dar.

Weiter ist die Farblackschicht 6 bevorzugt auch eingefärbt, insbesondere mittels Farbstoffen und/oder mittels Farbpigmenten eingefärbt. Vorzugsweise ist es hierbei möglich, dass der Pigmentierungsgrad der Farblackschicht 6 zwischen 5 % und 80 %, bevorzugt zwischen 40 % und 45 %, beträgt. Bei der in Fig. 1a gezeigten Farblackschicht 6 handelt es sich beispielsweise um eine mittels Farbpigmenten eingefärbte Schicht, wobei der Pigmentierungsgrad beispielsweise zwischen 40 % und 45 % beträgt.

Gemäß einem weiteren Ausführungsbeispiel der Erfindung ist die Farblackschicht 6 oder eine an die zweite Farblackschicht 6 angrenzende Schicht als Lichtleiterschicht ausgebildet. Bevorzugt weist diese Lichtleiterschicht an einer ihrer Stirnseiten eine Lichteinkoppelfläche auf, insbesondere in die Licht einer Lichtquelle in die Lichtleiterschicht eingestrahlt wird. Dabei ist es möglich, dass diese Lichtquelle so angeordnet ist, dass diese in Blickrichtung nicht unterhalb der Dekorfolie 1, sondern beispielsweise seitlich dazu versetzt angeordnet ist. Weiter ist es sinnvoll, wenn die Lichtleiterschicht zumindest flächenbereichsweise an ihrer zu der transparenten Laserschutzlackschicht 5 weisenden Oberfläche Lichtauskoppelflächen aufweist, die beispielsweise eine Oberflächenstrukturierung aufweisen. Hierbei ist es möglich, dass die Lichtauskoppelflächen derart ausgestaltet sind, dass bevorzugt über die Lichtauskoppelflächen verteilt gleichmäßig diffus streuendes Licht ausgekoppelt wird.

Weiter ist es hierbei zweckmäßig, wenn in das Material der Farblackschicht 6, welche in der Ausführung als Lichtleiterschicht beispielsweise aus Polycarbonat oder PVC besteht, alternativ oder zusätzlich zu einer Oberflächenstrukturierung zumindest im Bereich der Lichtauskoppelflächen ein fluoreszierender Farbstoff bevorzugt in Form von Farbstoffpartikeln eingelagert ist. So ist es möglich, dass die Farblackschicht 6 insbesondere im Bereich der Lichtauskoppelflächen einen fluoreszierenden Farbstoff, bevorzugt in Form von Farbstoffpartikeln, aufweist. Insbesondere bei Einstrahlung von Licht in die Lichtleiterschicht werden die Farbstoffpartikel zur Fluoreszenz angeregt und strahlen isotrop, also auch in Richtung der Lichtleiterschicht, Fluoreszenzlicht aus. So ist hierbei möglich, die Farbe des ausgekoppelten Lichts bei eingeschalteter Lichtquelle in Abhängigkeit des fluoreszierenden Farbstoffs in dem Kunststoffmaterial festzulegen.

Hierbei ist es möglich, dass die Farblackschicht 6 in der Ausführung als Lichtleiterschicht insbesondere als eine selbsttragende, trockene Schicht ausgestaltet ist, die beispielsweise mittels Verkleben oder Lamination oder ähnlichen Verfahren aufgebracht wird. Weiter ist es auch möglich, dass die Farblackschicht 6 in der Ausführung als Lichtleiterschicht mittels eines Nassverfahrens gedruckt oder gegossenen wird.

Die in Fig. 1b gezeigte Dekorfolie 1, insbesondere zur Dekoration eines Kunststoffformteils, umfasst eine Farblackschicht 4, eine Farblackschicht 6, eine Schutzlackschicht 8 und eine transparente Laserschutzlackschicht 5, wobei die transparente Laserschutzlackschicht 5 zwischen der Farblackschicht 4 und der Farblackschicht 6 angeordnet ist.

Wie in Fig. 1b gezeigt, ist die Schutzlackschicht 8 oberhalb der Farblackschicht 4 angeordnet. Erfindungsgemäß bildet die Farblackschicht 4 die einem Betrachter zugewandte Seite der Dekorfolie 1. Somit ist die Schutzlackschicht 8 auf der dem Betrachter zugewandten Seite der Dekorfolie 1 angeordnet.

Unter den Bezeichnungen unterhalb und/oder oberhalb wird hierbei insbesondere die Anordnung von Schichten in Bezug auf eine andere Schicht bei Betrachtung durch einen Betrachter aus einer Betrachtungsrichtung verstanden. So ist es zweckmäßig, wenn die Bezeichnungen unterhalb und/oder oberhalb ein Bezugssystem darstellen. So ist beispielsweise, wie in Fig. 1b gezeigt, die Farblackschicht 6 in Betrachtungsrichtung unterhalb der transparenten Laserschutzlackschicht 5 angeordnet.

So ist vorgesehen, dass die Schutzlackschicht 8 die zu einem Betrachter weisende Schicht bildet. Die Schutzlackschicht 8 ist, wie in Fig. 1b gezeigt, in Betrachtungsrichtung oberhalb der Farblackschicht 4, der Farblackschicht 6 und der transparenten Laserschutzlackschicht 5 angeordnet. So ist die Schutzlackschicht 8, wie in Fig. 1b gezeigt, auf der der transparenten Laserschutzlackschicht 5 abgewandten Seite der Farblackschicht 4 angeordnet.

Wie in Fig. 1b gezeigt, bedeckt die Schutzlackschicht 8 bei Betrachtungsrichtung senkrecht zu einer von der Farblackschicht 4, der Farblackschicht 6 und/oder der transparenten Laserschutzlackschicht 5 aufgespannten Ebene die Farblackschicht 4 bevorzugt vollständig. Es ist jedoch auch möglich, dass die Schutzlackschicht 8 die Farblackschicht 4 lediglich bereichsweise bedeckt.

Vorteilhafterweise schützt die Schutzlackschicht 8 die in Betrachtungsrichtung unterhalb der Schutzlackschicht 8 angeordneten Schichten vor mechanischen, physikalischen und/oder chemischen Umwelteinflüssen, insbesondere zumindest in denjenigen Bereichen, in welchen die Schutzlackschicht 8 nicht später wieder entfernt wird bzw. aufgebracht ist.

Zweckmäßigerweise ist die Schutzlackschicht 8 transparent ausgebildet und/oder weist die Schutzlackschicht 8 eine Transmission, insbesondere im Wellenlängenbereich zwischen 380 nm bis 780 nm, von mindestens 25 %, bevorzugt von mindestens 35 %, weiter bevorzugt von mindestens 85 %, auf. So handelt es sich bei der in Fig. 1b gezeigten Schutzlackschicht 8 um eine transparente Schutzlackschicht 8, welche beispielsweise eine Transmission von mindestens 85 % aufweist.

Die Schichtdicke der Schutzlackschicht 8 beträgt vorzugsweise zwischen 0,5 µm und 50 µm, weiter bevorzugt zwischen 4,0 µm und 4,5 µm. Die in Fig. 1b gezeigte Schutzlackschicht 8 weist beispielsweise eine Schichtdicke zwischen 4,0 µm und 4,5 µm auf.

Weiter ist die Schutzlackschicht 8 bevorzugt eine Schicht aus Monomeren, Oligomeren, Polymeren und/oder Copolymeren, bevorzugt umfassend Polymethylmethacrylat (PMMA), Polyester, Polycarbonat (PC), Polyamid (PA), Polyurethane (PU) und/oder Polyvinylchlorid (PVC), weiter bevorzugt umfassend PU und/oder PVC. Weiter ist es möglich, dass die Schutzlackschicht 8 Polyacrylat als Bindemittel aufweist.

Weiter ist es auch möglich, dass die Schutzlackschicht 8 Polyetherimide (PEI) und/oder Polysulfone, wie beispielsweise Poly(arylethersulfon)e (PAES), aufweist.

Weiter ist es auch möglich, dass die Schutzlackschicht 8 thermisch und/oder durch energiereiche Strahlung aushärtet bzw. ausgehärtet ist/wird. Bevorzugt erfolgt die Härtung vor und/oder nach der Verarbeitung der Dekorfolie bzw. Transferfolie und/oder Applikation der Dekorfolie bzw. Transferfolie auf ein Substrat.

So weist die in Fig. 1b gezeigte Schutzlackschicht beispielsweise Acrylat, insbesondere reaktiv härtende Acrylate, als Bindemittel auf, wobei die Härtung bevorzugt thermisch und/oder mittels UV-Strahlung erfolgt.

Weiter ist es auch möglich, dass die Schutzlackschicht 8 eingefärbt ist, insbesondere dass die Schutzlackschicht mittels Farbstoffen und/oder Farbpigmenten eingefärbt ist. Vorzugsweise beträgt der Pigmentierungsgrad der Schutzlackschicht 8 weniger als 15 %, bevorzugt weniger als 10 %, weiter bevorzugt weniger als 5 %.

Es ist jedoch auch möglich, dass die Schutzlackschicht 8 farblos ist und/oder klar transparent ist und/oder dass der Pigmentierungsgrad der Schutzlackschicht 0 % beträgt.

Vorzugsweise ist die Schutzlackschicht 8 klar, insbesondere lenkt die Schutzlackschicht 8 transmittiertes Licht, insbesondere Licht im Wellenlängenbereich zwischen 380 nm und 780 nm, um weniger als 8 %, bevorzugt um weniger als 4 %, durch Streuung ab.

So handelt es sich bei der in Fig. 1b gezeigten Schutzlackschicht 8 beispielsweise um eine unpigmentierte Klarlackschicht.

Bezüglich der Ausgestaltung weiteren in Fig. 1b gezeigten Schichten, insbesondere der Farblackschicht 4, der transparenten Laserschutzlackschicht 5 und der Farblackschicht 6, ist hier auf obige Ausführungen verwiesen.

Die in Fig. 1c gezeigte Dekorfolie 1 entspricht der in Fig. 1b gezeigten Dekorfolie mit dem Unterschied, dass die Farblackschicht 4 als eine Metallschicht 4a und die Farblackschicht 6 als eine Metallschicht 6a ausgebildet sind.

Vorteilhafterweise handelt es sich bei der Metallschicht 4a um eine optisch dichte Metallschicht, welche bevorzugt eine geringere Transmission im Vergleich zu der Metallschicht 6a, aufweist. Gleichermaßen ist es von Vorteil, wenn die Metallschicht 6a eine optisch dünne Metallschicht ist, welche bevorzugt eine größere Transmission im Vergleich zu der Metallschicht 4a, aufweist.

Vorteilhafterweise weist die Metallschicht 4a eine Transmission, insbesondere im Wellenlängenbereich zwischen 380 nm bis 780 nm, von maximal 30 %, bevorzugt von maximal 10 %, weiter bevorzugt von maximal 5 %, auf.

Die Metallschicht 6a weist bevorzugt eine Transmission, insbesondere im Wellenlängenbereich zwischen 380 nm bis 780 nm, von mehr als 10 %, bevorzugt von mehr als 25 %, weiter bevorzugt von mehr als 50 %, noch weiter bevorzugt von mehr als 75 %, ferner noch weiter bevorzugt von mehr als 90 %, auf.

Ferner ist es von Vorteil, wenn die Schichtdicke der ersten Metallschicht 4a zwischen 10 nm und 1 µm, bevorzugt zwischen 20 nm und 300 nm, beträgt.

Die Schichtdicke der zweiten Metallschicht 6a beträgt vorzugsweise zwischen 1 nm und 500 nm, bevorzugt zwischen 10 nm und 80 nm.

Hierdurch wird insbesondere erreicht, dass die Metallschicht 4a aufgrund ihrer geringeren Transmission vom Betrachter als opak wahrgenommen wird, während die Metallschicht 6a transparent ist.

Der funktionale Zusammenhang zwischen Transmission (T) und optischer Dickte (OD) formuliert sich dabei wie folgt: OD = log (100/T[%]).

Die Transmissionswerte werden, wie oben dargelegt, insbesondere im Wellenlängenbereich zwischen 380 nm bis 780 nm, d.h. im für das menschliche Auge sichtbaren Wellenlängenbereich, ermittelt.

Die optische Dichte einer Metallschicht hängt insbesondere neben der verwendeten Schichtdicke unter anderem von dem verwendeten Metall ab.

So ist es möglich, dass die Metallschicht 4a und/oder die Metallschicht 6a aus Aluminium, Kobalt, Kupfer, Gold, Eisen, Chrom, Nickel, Silber, Platin, Palladium und/oder Titan oder Legierungen daraus ausgebildet ist. Vorzugsweise wird Aluminium für die optisch dichtere Metallschicht 4a aufgrund seiner geringen Eindringtiefe für Licht aus dem für das menschliche Auge sichtbaren Wellenlängenbereich und Gold, Kupfer, Chrom, Silber und/oder Eisen für die optisch dünnere Metallschicht 6a aufgrund ihrer großen Eindringtiefe für Licht aus dem für das menschliche Auge sichtbaren Wellenlängenbereich verwendet.

Die in Fig. 1d gezeigte Dekorfolie 1 entspricht der in Fig. 1b gezeigten Dekorfolie 1 mit dem Unterschied, dass die Farblackschicht 4b und die Farblackschicht 6b mehrschichtig ausgebildet ist.

Wie in Fig. 1d gezeigt ist die Farblackschicht 4b aus zwei Teilschichten ausgebildet, wobei die zwei Teilschichten jeweils insbesondere eine Schichtdicke zwischen 0,1 µm und 50 µm, bevorzugt zwischen 0,5 µm und 5,0 µm, aufweisen.

Ebenso ist, wie in Fig. 1d gezeigt, auch die Farblackschicht 6b aus zwei Teilschichten ausgebildet, wobei die zwei Teilschichten bevorzugt jeweils eine Schichtdicke zwischen 0,1 µm und 50 µm, weiter bevorzugt zwischen 1,0 µm und 5,0 µm, aufweisen.

Weiter ist es möglich, dass die zwei Teilschichten jeweils unterschiedliche Farben, insbesondere aus dem RGB-Farbraum oder dem CMYK-Farbraum, aufweisen.

Unter Farbe wird hierbei insbesondere ein Farbpunkt verstanden der in einem Farbmodell wie z.B. dem RGB-Farbmodell (R = Rot; G = Grün; B = Blau) oder dem CMYK-Farbmodell (C = Cyan; M = Magenta; Y = Gelb; K = Schwarz) innerhalb des Farbraums dargestellt werden kann.

Die in Fig. 1e gezeigte Dekorfolie 1 entspricht der in Fig. 1a gezeigten Dekorfolie 1 mit dem Unterschied, dass die Farblackschicht 4 bereichsweise ausgebildet ist.

Wie in Fig. 1e gezeigt, ist die Farblackschicht 4 in den Bereichen 16b vorhanden und in den Bereichen 16c nicht vorhanden.

Eine derartige bereichsweise ausgebildete Farblackschicht 4 kann beispielsweise mittels Druckverfahren, wie Hochdruck, insbesondere Flexodruck, Flachdruck, insbesondere Offsetdruck, Tiefdruck, Inkjetdruck, und/oder Durchdruck, insbesondere Siebdruck, erzeugt werden. Weiter ist es auch möglich, insbesondere wenn die Farblackschicht 4 als Metallschicht 4a ausgebildet ist, dass diese mittels Metallisierungsverfahren wie beispielsweise CVD-Verfahren (*engl.* chemical vapor deposition) und/oder PVD-Verfahren (*engl.* physical vapor deposition) bevorzugt unter Verwendung einer Maske, insbesondere einer fotolithographischen Maske, erzeugt wird.

Unter Bereich wird hierbei insbesondere jeweils eine definierte Fläche einer Schicht oder Lage verstanden, die bei Betrachtung senkrecht zu einer von der Dekorfolie 1, insbesondere von der Farblackschicht 4, der transparenten Laserschutzlackschicht 5 und/oder der Farblackschicht 6, aufgespannten Ebene eingenommen wird. So weist beispielsweise die Farblackschicht 4 Bereiche 16b auf, in welchen die Farblackschicht 4 vorhanden ist, und Bereiche 16c auf, in welchen die Farblackschicht 4 nicht vorhanden ist, wobei jeder der Bereiche 16b, 16c jeweils eine definierte Fläche bei Betrachtung senkrecht zu einer von der transparenten Laserschutzlackschicht 5 aufgespannten Ebene einnimmt.

Die in Fig. 1f gezeigte Dekorfolie entspricht der in Fig. 1b gezeigten Dekorfolie 1 mit dem Unterschied, dass die Dekorfolie 1 weiter eine Kleberschicht 9 umfasst.

Wie in Fig. 1f gezeigt ist die Kleberschicht 9 auf der der transparenten Laserschutzlackschicht 5 abgewandten Seite der Farblackschicht 6 angeordnet.

Es ist jedoch auch möglich, dass die Kleberschicht 9 auf der der transparenten Laserschutzlackschicht abgewandten Seite der Farblackschicht 4 und/oder der Schutzlackschicht 8 angeordnet ist.

So ist es möglich, dass die Kleberschicht 9 die zu einem Betrachter weisende und/oder die von einem Betrachter wegweisende Schicht bzw. Oberfläche der Dekorfolie 1 bildet und/oder in Betrachtungsrichtung oberhalb der Farblackschicht 4, der Farblackschicht 6 und/oder der transparenten Laserschutzlackschicht 5 liegt bzw. angeordnet ist und/oder dass die Kleberschicht 9 in Betrachtungsrichtung unterhalb der Farblackschicht 4, der Farblackschicht 6 und/oder der transparenten Laserschutzlackschicht 5 liegt bzw. angeordnet ist.

Vorzugsweise bedeckt die Kleberschicht 9 bei Betrachtungsrichtung senkrecht zu einer von der Farblackschicht 4, der Farblackschicht 6 und/oder der transparenten Laserschutzlackschicht 5 aufgespannten Ebene die Farblackschicht 4 oder die Farblackschicht 6 bereichsweise oder vollständig.

Hierdurch wird es möglich, dass die Dekorfolie 1 auf ein Kunststoffformteil aufgebracht, insbesondere fest aufgebracht, werden kann, insbesondere derart aufgebracht werden kann, dass die Dekorfolie 1 mit dem Kunststoffformteil fest verbunden ist.

Unter dem Begriff fest verbunden wird hierbei bevorzugt eine beständige Verbindung von zwei Elementen verstanden, so dass sich diese nicht mehr mechanisch trennen lassen ohne zumindest eines der Elemente zu beschädigen. So ist beispielsweise die Dekorfolie 1 und ein Kunststoffformteil fest verbunden, wenn zwischen diesen beiden Elementen eine beständige Verbindung besteht und sich die Dekorfolie 1 und/oder das Kunststoffformteil nicht trennen lassen ohne eines der beiden Elemente zu beschädigen.

Zweckmäßigerweise weist die Kleberschicht 9 eine Schichtdicke zwischen 0,1 µm und 50 µm, bevorzugt zwischen 0,5 µm und 7 µm, weiter bevorzugt zwischen 2,5 µm und 3,0 µm, auf. Die in Fig. 1f gezeigte Kleberschicht 9, weist beispielsweise eine Schichtdicke zwischen 2,5 µm und 3,0 µm auf.

Bevorzugt ist die Kleberschicht 9 transparent ausgebildet und/oder weist eine Transmission, insbesondere im Wellenlängenbereich zwischen 380 nm bis 780 nm, von mindestens 45 %, bevorzugt von mindestens 65 %, weiter bevorzugt von mindestens 95 %, auf. So weist die in Fig. 1f gezeigte Kleberschicht 9 beispielsweise eine Transmission von mindestens 45 % auf.

Vorzugsweise besteht die Kleberschicht 9 aus einem Material, das nach Applikation auf das Kunststoffformteil klar transparent ist, insbesondere besteht die Kleberschicht 9 aus einem Material, dass nach Applikation auf das Kunststoffformteil Licht im Wellenlängenbereich zwischen 380 nm und 780 nm, um weniger als 8 %, bevorzugt um weniger als 4 %, durch Streuung ablenkt.

Die Kleberschicht 9 ist bevorzugt eine Schicht aus Polymeren und/oder Copolymeren, insbesondere umfassend PMMA, Polyester, PU oder PVC. Weiter ist es möglich, dass die Kleberschicht 9 Acrylat als Bindemittel aufweist. Beispielsweise weist die Fig. 1f gezeigte Kleberschicht 9 Acrylat als Bindemittel auf.

Auch ist es denkbar, dass die Kleberschicht 9 eingefärbt ist, insbesondere dass die Kleberschicht 9 mittels Farbstoffen und/oder Farbpigmenten eingefärbt ist. Vorteilhafterweise beträgt der Pigmentierungsgrad der Kleberschicht 9 zwischen 5 % und 50 %, bevorzugt zwischen 30 % und 35 %. Beispielsweise weist die in Fig. 1f gezeigte Kleberschicht 9 einen Pigmentierungsgrad zwischen 30 % und 35 % auf.

Es ist jedoch auch denkbar, dass die Kleberschicht 9 farblos ist und/oder klar transparent ist und/oder dass der Pigmentierungsgrad der Kleberschicht 9 0 % beträgt.

Die in Fig. 1g gezeigte Dekorfolie 1, insbesondere zur Dekoration eines Kunststoffformteils, umfasst eine Farblackschicht 4, eine Farblackschicht 6, eine Schutzlackschicht 8, eine elektrische Funktionsschicht 10 mit einer elektrischen Funktionsstruktur und eine transparente Laserschutzlackschicht 5, wobei die transparente Laserschutzlackschicht 5 zwischen der Farblackschicht 4 und der Farblackschicht 6 angeordnet ist. Die in Fig. 1g gezeigte Dekorfolie 1 entspricht also der in Fig. 1b gezeigten Dekorfolie 1 mit dem Unterschied, dass die Dekorfolie 1 weiter eine elektrische Funktionsschicht 10 mit mindestens einer elektrischen Funktionsstruktur aufweist.

Ein Touchsensorfeld bildet die elektrische Funktionsstruktur aus, welches eine Tastfeldfunktionalität bereitstellt.

Unter Touchsensorfeld wird hierbei insbesondere ein berührungsempfindlicher Sensor verstanden, der die Steuerung eines elektrischen Funktionselements, beispielsweise eines PDAs oder eines mit einem Symbol oder Schriftzug gekennzeichneten Bedienelements beispielsweise eines KFZs, ermöglicht. Ebenfalls wird unter einem Touchsensorfeld insbesondere ein Multitouchsensorfeld verstanden, welches mehrere gleichzeitige Berührungen verarbeiten kann.

Hierbei ist es möglich, dass die mindestens eine elektrische Funktionsstruktur ein kapazitives Sensorfeld ausbildet.

Es ist jedoch auch möglich, dass die mindestens eine elektrische Funktionsstruktur ein resistives oder induktives Sensorfeld ausbildet.

Weiter ist es von Vorteil, wenn die mindestens eine elektrische Funktionsstruktur zusätzlich noch weitere Funktionselemente aufweist, wie beispielsweise elektrische Zuleitungen, elektrische und/oder elektronische Bauelemente, wie beispielsweise integrierte Schaltkreise.

Auch ist es denkbar, dass die mindestens eine elektrische Funktionsstruktur einlagig oder auch mehrlagig ausgebildet ist. Weiter ist es möglich, wenn die mindestens eine elektrische Funktionsstruktur zumindest bereichsweise eine Verstärkungsschicht, welche beispielsweise mittels Aufgalvanisierung und/oder mittels Bedruckung mit Metallpigmentschichten und/oder anderen leitfähigen Schichten wie beispielsweise Karbon aufgebracht wird, aufweist.

So ist es möglich, dass die Dekorfolie 1 ein Touchsensor ausbildet und/oder dass die Dekorfolie 1 ein Touchsensor ist.

Weiter ist es auch von Vorteil, wenn alle in Betrachtungsrichtung unterhalb der transparenten Laserschutzlackschicht 5 angeordneten Schichten transparent sind, insbesondere wenn alle unterhalb der transparenten Laserschutzlackschicht 5 angeordneten Schichten eine Transmission von mindestens 25 %, bevorzugt von mindestens 45 %, aufweisen.

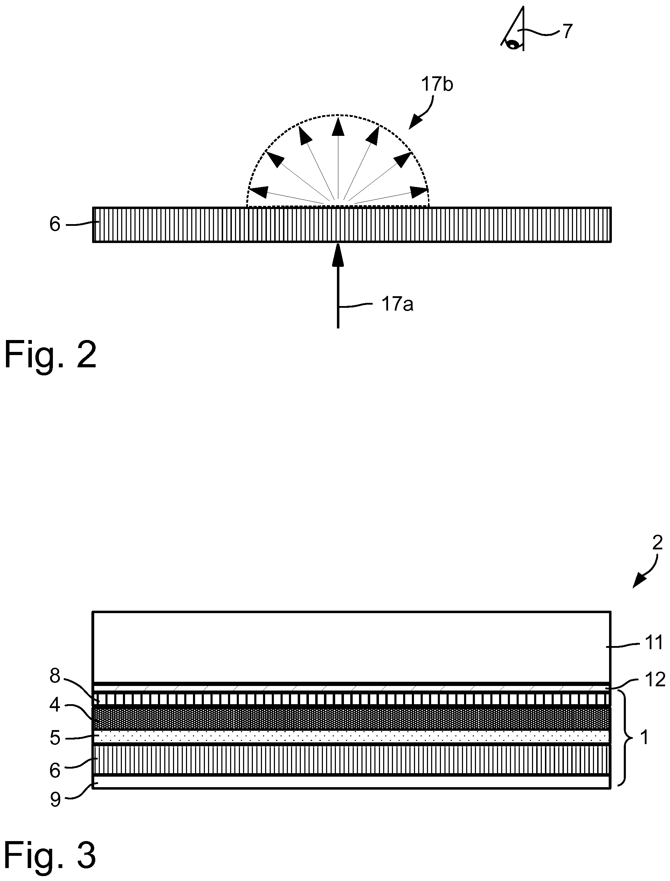

Fig. 2 zeigt schematisch eine diffus streuende Schicht. Anhand der Fig. 2 wird die Funktionsweise einer diffus streuenden Schicht erläutert. Bei der diffus streuenden Schicht kann es sich beispielsweise um die Farblackschicht 6 handeln, welche insbesondere transmittiertes Licht diffus, bevorzugt in einen großen Raumwinkelbereich, weiter bevorzugt in alle Raumrichtungen, streut, so dass Licht, insbesondere einer Punktlichtquelle, homogen gestreut wird, so dass die Farblackschicht 6 für einen Betrachter 7, insbesondere trotz Beleuchtung mit einer Punktlichtquelle, homogen beleuchtet erscheint. So ist es möglich, dass die Farblackschicht 6 eine Diffusorfolie ausbildet und/oder dass die Farblackschicht 6 eine Diffusorfolie ist.

Wie in Fig. 2 gezeigt, wird einfallendes Licht 17a insbesondere durch die Farblackschicht 6 transmittiert und gestreut. Vorzugsweise wird von der Farblackschicht 6, insbesondere Licht im Wellenlängenbereich zwischen 380 nm und 780 nm, diffus gestreut, und/oder die Farblackschicht 6 weist bevorzugt einen Haze-Wert von mindestens 50 Haze-Units, bevorzugt von mindestens 75 Haze-Units, auf.

Auch ist es vorteilhaft, wenn die Farblackschicht 6 das transmittierte Licht über einen großen Winkelbereich, insbesondere Raumwinkelbereich, streut. So ist es möglich, dass das von der Farblackschicht 6 gestreute Licht 17b über einen Winkelbereich, insbesondere über einen Raumwinkelbereich, von mindestens 120°, bevorzugt von mindestens 150°, noch weiter bevorzugt von mindestens 180°, gestreut wird. In anderen Worten ist es möglich, dass die Farblackschicht 6 das transmittierte Licht, insbesondere gleichmäßig, kugelförmig, bevorzugt halbkugelförmig, streut, wobei vorzugsweise gleiche Flächenbereiche der Kugel, bevorzugt der Halbkugel, im Wesentlichen denselben Lichtanteil des gestreuten Lichts erhalten.

Erfindungsgemäß lenkt die Farblackschicht 6 mehr als 50 % des transmittierten Lichts, insbesondere aus dem Wellenlängenbereich zwischen 380 nm und 780 nm, um mehr als 2,5° von der Richtung des einfallenden Lichtstrahls ab. Auch ist es, wie oben bereits dargelegt, möglich, dass die Farblackschicht 6 mehr als 75 %, bevorzugt mehr als 85 %, des transmittierten Lichts, insbesondere aus dem Wellenlängenbereich zwischen 380 nm und 780 nm, um mehr als 2,5° von der Richtung des einfallenden Lichtstrahls ablenkt.

Insbesondere durch die Verteilung des gestreuten Lichts 17b auf einen großen Winkelbereich, insbesondere Raumwinkelbereich, erscheint für den Betrachter 7 die eine diffus streuende Schicht, wie hier die Farblackschicht 6, als homogen beleuchtet, obwohl diese beispielsweise von einer Punktlichtquelle hinterleuchtet wird. Somit wird bevorzugt durch eine diffus streuende Schicht, wie hier der Farblackschicht 6, für einen Betrachter eine gleichmäßig ausgeleuchtete Fläche erzeugt, auch wenn hinter der diffus streuenden Schicht, wie hier der Farblackschicht 6 beispielsweise mehrere Punktlichtquellen, wie beispielsweise LEDs, angeordnet sind.

Fig. 3 zeigt schematisch eine Schnittdarstellung einer Transferfolie 2. Die Transferfolie 2, insbesondere Heißprägefolie und/oder In-Mould-Folie, umfasst eine Trägerfolie 11 und eine von der Trägerfolie 11 ablösbare Dekorfolie 1. Bezüglich der Ausgestaltung der Dekorfolie 1 ist hier auf obige Ausführungen verwiesen.

Wie in Fig. 3 gezeigt, umfasst die Transferfolie 2 eine Trägerfolie 11 und insbesondere eine von der Trägerfolie 11 ablösbare Transferlage, wobei bevorzugt die Dekorfolie 1 die Transferlage der Transferfolie 2 ausbildet und wobei die Transferlage auf der Trägerfolie 11 angeordnet und von der Trägerfolie ablösbar ist.

Weiter umfasst die Transferfolie 2, wie Fig. 3 zu entnehmen ist, vorteilhafterweise weiter eine Ablöseschicht 12, welche insbesondere zwischen der Trägerfolie 11 und der ablösbaren Dekorfolie 1 angeordnet ist.

Vorzugsweise weist die Ablöseschicht 12 eine Schichtdicke zwischen 0,01 µm und 10 µm, bevorzugt zwischen 0,1 µm und 5 µm, auf. Weiter besteht die Ablöseschicht 12 insbesondere aus Wachsen, Polyethylen (PE), Polypropylen (PP), Cellulose-Derivaten und/oder Poly(organo)siloxanen.

Zweckmäßigerweise ist die Trägerfolie 11 eine transparente Trägerfolie, insbesondere aus PET, PMMA, PC, ABS oder PU, und/oder weist die Trägerfolie 11 eine Schichtdicke zwischen 2 µm und 250 µm, bevorzugt zwischen 20 µm und 125 µm, auf.

Eine derartige Transferfolie 2 wird insbesondere auch als Heißprägefolie und/oder In-Mould-Folie, insbesondere als In-Mould-Decoration-Folie, Insert-Moulding-Folie, In-Mould-Labeling-Folie und/oder Print-Mould-Design-Folie, verwendet.

So ist es möglich, dass die Transferfolie 2 als Heißprägefolie verwendet wird, wobei insbesondere die Dekorfolie 1 mittels eines beheizten Prägestempels, der während eines bestimmten Zeitraums Druck auf die Transferfolie 2 ausübt, auf ein Zielsubstrat, wie ein Kunststoffformteil, übertragen wird. Anschließend wird bevorzugt die Trägerfolie 11 entfernt.

Weiter ist auch möglich, dass die Transferfolie 2 als In-Mould-Folie, insbesondere als In-Mould-Decoration-Folie, Insert-Moulding-Folie, In-Mould-Labeling-Folie und/oder Print-Mould-Design-Folie, verwendet wird, wobei insbesondere die Transferfolie 2 in eine Spritzgussform eingelegt wird und anschließend, bevorzugt nach dem Schließen der Spritzgussform, die Transferfolie 2 mit einer Kunststoffmasse derart hinterspritzt wird, dass sich die Dekorfolie fest mit der Kunststoffmasse verbindet. Auch hier wird anschließend bevorzugt die Trägerfolie 11 entfernt.

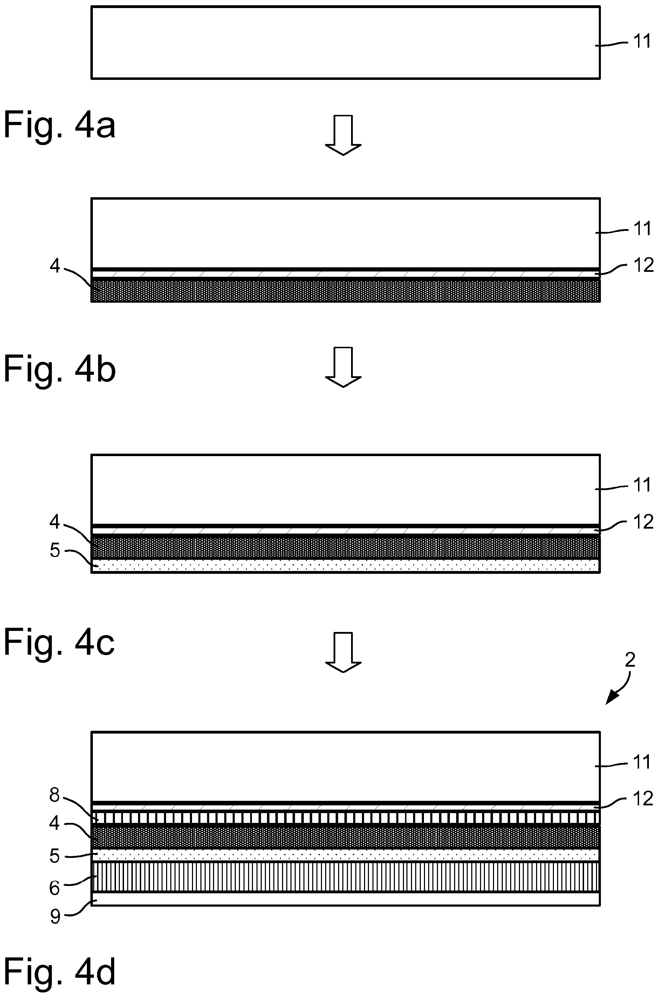

Fig. 4a bis Fig. 4d zeigen schematisch Verfahrensschritte zur Herstellung einer Transferfolie 2.

Wie in Fig. 4a gezeigt wird zunächst Trägerfolie 11 bereitgestellt. Anschließend wird optional eine Ablöseschicht 12 auf die Trägerfolie 11 aufgebracht. Bezüglich der Ausgestaltung der Ablöseschicht 12 ist hier auf obige Ausführungen verwiesen. Das Aufbringen der Ablöseschicht 12 erfolgt bevorzugt mittels Druckverfahren oder mittels Bedampfungsverfahren. In einem weiteren Schritt wird, wie in Fig. 4b gezeigt, die Farblackschicht 4 aufgebracht. Bezüglich der Ausgestaltung der Farblackschicht 4 ist hier auf obige Ausführungen verwiesen. Das Aufbringen der Farblackschicht 4 erfolgt hierbei bevorzugt mittels Druckverfahren und/oder Metallisierungsverfahren. Bezüglich möglicher Druckverfahren und/oder Metallisierungsverfahren ist auch hier auf obige Ausführungen verwiesen. In einem weiteren Schritt wird, wie in Fig. 4c gezeigt, die transparente Laserschutzlackschicht 5, insbesondere mittels Druckverfahren, aufgebracht. Auch hier ist wieder bezüglich der Ausgestaltung der transparenten Laserschutzlackschicht 5 und möglicher Druckverfahren auf obige Ausführungen verwiesen. Auf die transparente Laserschutzlackschicht 5 wird in einem weiteren Schritt, wie in Fig. 4d gezeigt, die Farblackschicht 6 aufgebracht. Das Aufbringen der Farblackschicht 6 erfolgt hierbei insbesondere mittels Druckverfahren, Metallisierungsverfahren und/oder Heiß- oder Kalttransferverfahren. Auch ist wieder bezüglich der Druck-, Metallisierungsverfahren und Transferverfahren auf obige Ausführungen verwiesen. Anschließend wird optional in einem weiteren Schritt eine Kleberschicht 9 beispielsweise mittels Druckverfahren aufgebracht. Bezüglich der Ausgestaltung der Kleberschicht 9 ist hier auf obige Ausführungen verwiesen. Die in Fig. 4d gezeigte Schutzlackschicht 8 kann vor dem Aufbringen der ersten Farblackschicht 4 zusätzlich, bevorzugt mittels Druckverfahren oder Gießverfahren, aufgebracht werden. Auch hier ist wieder bezüglich der Ausgestaltung der Schutzlackschicht 8 und möglicher Applikationsverfahren auf obige Ausführungen verwiesen. Weiter ist es zweckmäßig, wenn die aufgebrachten Schichten thermisch und/oder mittels UV-Strahlung vor- und/oder ausgehärtet werden.

Bevorzugt werden die oben dargelegten Verfahrensschritte in der oben genannten Reihenfolge ausgeführt.

Vorzugsweise werden bei dem Verfahren zur Herstellung einer Transferfolie 2 die Schichten, insbesondere die Farblackschicht 4, die transparente Laserschutzlackschicht 5 und/oder die Farblackschicht 6 direkt, d.h. bevorzugt ohne dass weitere Schichten zwischen den Schichten, insbesondere zwischen der Farblackschicht 4, der transparenten Laserschutzlackschicht 5 und/oder der Farblackschicht 6, angeordnet sind, gemäß den oben dargelegten Schritten aufeinander aufgebracht. So ist es möglich, dass die von der Trägerfolie 11 ablösbare Dekorfolie 1 die Farblackschicht 4, die Farblackschicht 6 und die transparente Laserschutzlackschicht 5 umfasst, wobei die transparente Laserschutzlackschicht 5 zwischen der Farblackschicht 4 und der Farblackschicht 6 angeordnet ist.

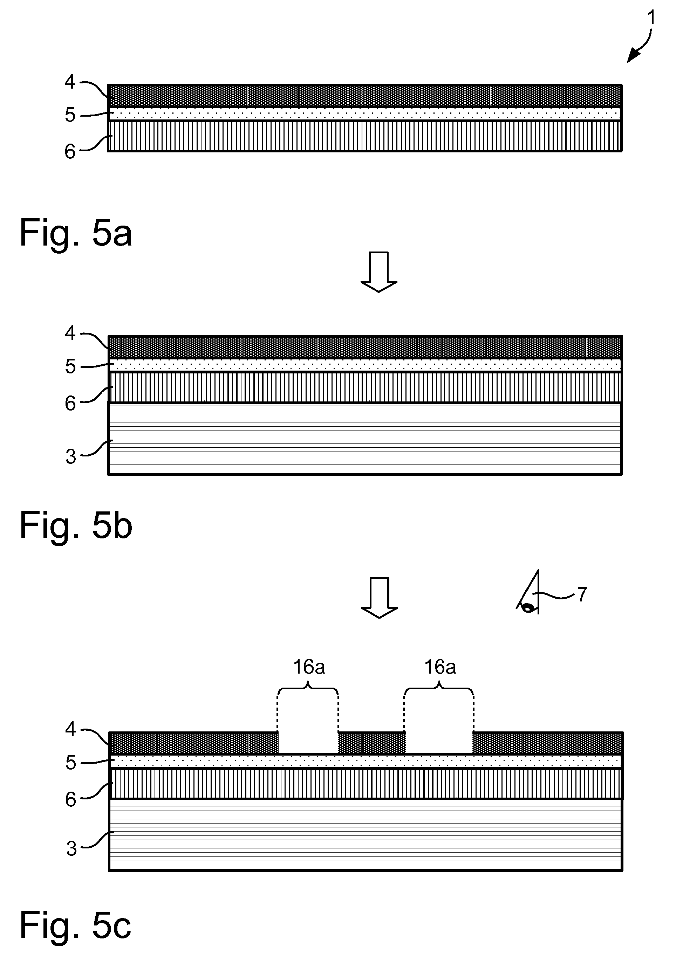

Fig. 5a bis Fig. 5c zeigen schematisch Verfahrensschritte zur Dekoration eines Kunststoffformteils 3.

Zunächst wird, wie in Fig. 5a gezeigt, eine Dekorfolie 1 bereitgestellt, wobei die Dekorfolie 1 eine Farblackschicht 4, eine Farblackschicht 6 und eine transparente Laserschutzlackschicht 5 umfasst, und wobei die transparente Laserschutzlackschicht 5 zwischen der Farblackschicht 4 und der Farblackschicht 6 angeordnet ist. Bezüglich weiterer möglicher Ausgestaltungen der Dekorfolie 1 ist hier auf obige Ausführungen verwiesen. In einem weiteren Schritt wird die Dekorfolie 1, wie in Fig. 5b gezeigt, auf ein Kunststoffformteil 3 aufgebracht. Das Aufbringen der Dekorfolie erfolgt hierbei bevorzugt mittels Heiß- oder Kalttransferverfahren, weiter bevorzugt mittels Heißprägen und/oder In-Mould-Verfahren. Bezüglich der möglichen Applikationsverfahren ist hier auf obige Ausführungen verwiesen. In einem weiteren Schritt, der in Fig. 5c gezeigt ist, wird, die, insbesondere einem Betrachter zugewandte, Farblackschicht 4 in den Bereichen 16a mittels eines Lasers entfernt.

Unter Entfernen einer Schicht wird hierbei das teilweise und/oder vollständige Entfernen einer Schicht, insbesondere mittels Laserschneiden und/oder Laserablation, verstanden. Wird beispielsweise eine Schicht in einem Bereich entfernt, ist die entsprechende Schicht in diesem Bereich teilweise und/oder vollständig entfernt worden. Die Entfernung erfolgt hierbei bevorzugt aufgrund von Laserschneiden und/oder Laserablation. Unter Entfernen wird auch das teilweise und/oder vollständige Entfernen einer Schicht, insbesondere mittels mechanischer bzw. feinmechanischer Methoden verstanden, beispielsweise mittels Fräsen und/oder Schleifen und/oder Bohren.

Wie in Fig. 5c gezeigt, wird in dem Schritt b) die Dekorfolie 1 derart auf das Kunststoffformteil 3 aufgebracht, dass die Farblackschicht 4 die dem Betrachter 7 zugewandte Seite ausbildet und die Farblackschicht 6 die dem Betrachter abgewandte Seite ausbildet.

Vorteilhafterweise werden die obigen Verfahrensschritte in der oben angeführten Reihenfolge durchgeführt.

Vorteilhafterweise bilden die Bereiche 16a Dekorelemente, wie beispielsweise Symbole oder Schriftzüge, aus. Auch ist es möglich, wenn Bereiche 16a ein Logo und/oder ein Symbol und/oder ein Muster und/oder ein alphanumerisches Zeichen darstellen.

Weiter ist es auch bevorzugt, wenn die Bereiche 16a bei Betrachtung senkrecht auf die Dekorfolie 1 und/oder das Kunststoffformteil 3 eine Linienstärke von mindestens 50 µm, bevorzugt von mindestens 100 µm, aufweisen und/oder wenn die Bereiche 16a bei Betrachtung senkrecht auf die Dekorfolie 1 und/oder das Kunststoffformteil 3 eine Linienstärke von maximal 2 mm, bevorzugt von maximal 1 mm, weiter bevorzugt von maximal 0,5 mm, aufweisen.

Wie weiter in Fig. 5c gezeigt, ist es von Vorteil, dass in dem Schritt c) die Farblackschicht 4 in den Bereichen 16a erfindungsgemäß mittels des Lasers derart entfernt wird, dass die transparente Laserschutzlackschicht 5 freigelegt wird. So ist es möglich, dass in dem Schritt c) in den Bereichen 16a die Farblackschicht 4 vollständig entfernt wird.

Weiter ist es bevorzugt, wenn in dem Schritt c) die Farblackschicht 4 in den Bereichen 16a mittels eines Lasers derart entfernt wird, dass die Schichtdicke der transparenten Laserschutzlackschicht 5 in den Bereichen 16a, in welchen die Farblackschicht 4 mittels des Lasers entfernt wurde im Wesentlichen der Schichtdicke der transparenten Laserschutzlackschicht 5 in denjenigen Bereichen entspricht, in welchen die Farblackschicht 4 nicht mittels des Lasers entfernt wurde.

Insbesondere ist hierbei eine eventuelle leichte oberflächliche Verletzung der transparenten Laserschutzlackschicht 5 hinnehmbar, vorzugsweise solange dabei die Gesamtdicke der transparenten Laserschutzlackschicht 5 um nicht mehr als 50 %, bevorzugt um nicht mehr als 30 %, verringert wird.

Weiter ist es auch möglich, dass die transparente Laserschutzlackschicht 5 derart ausgestaltet ist, dass die Schichtdicke der transparenten Laserschutzlackschicht 5 in den Bereichen 16a, in welchen die Farblackschicht 4 mittels eines Lasers entfernt ist im Vergleich zu denjenigen Bereichen, in welchen die Farblackschicht 4 nicht mittels des Lasers entfernt ist, um weniger als 25 %, bevorzugt um weniger als 15 %, weiter bevorzugt, um weniger als 5 %, verringert wird.

Hierdurch ist insbesondere im Endprodukt sichergestellt, dass die transparente Laserschutzlackschicht 5 zum einen Ihre Schutzfunktion gegenüber Umwelteinflüssen für die darunterliegenden Schichten erfüllt und zum anderen, dass die transparente Laserschutzlackschicht 5 auch ihre Funktion als Abstands- bzw. Pufferschicht erfüllt bzw. erfüllt hat.

Weiter ist es möglich, dass in dem Schritt b) die Dekorfolie 1 mittels Transferverfahren, insbesondere Heiß- und/oder Kalttransferverfahren, wie beispielsweise Heißprägen, In-Mould-Decoration, Insert-Moulding, Print-Mould-Design, In-Mould-Labeling, Laminieren und/oder Aufkleben, aufgebracht wird.

Ferner ist es auch möglich, dass in dem Schritt b) die Dekorfolie 1 mittels Hinterspritzen auf das Kunststoffformteil 3 aufgebracht wird. Hierbei ist es sinnvoll, wenn das Verfahren weiter folgende Schritte umfasst:
- Einlegen der Dekorfolie 1 in eine Spritzgussform
- Hinterspritzen der Dekorfolie 1 mit einer Kunststoffmasse derart, dass sich die Dekorfolie 1 fest mit der Kunststoffmasse verbindet und insbesondere dass die Dekorfolie 1 eine erste Oberfläche des Kunststoffformteils 3 ausbildet. Bevorzugt bildet hierbei die ausgehärtete Kunststoffmasse das Kunststoffformteil 3 aus.

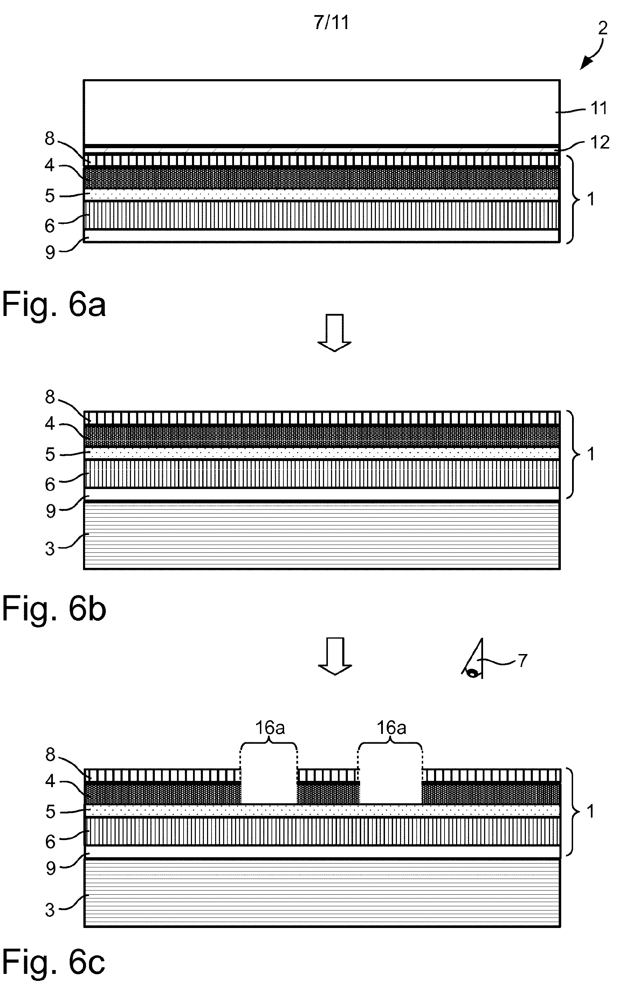

Fig. 6a bis Fig. 6c zeigen schematisch Verfahrensschritte zur Dekoration eines Kunststoffformteils 3.

Zunächst wird, wie in Fig. 6a gezeigt, eine Transferfolie 2 umfassend eine Dekorfolie 1 bereitgestellt, wobei die Dekorfolie 1 eine Schutzlackschicht 8, eine Farblackschicht 4, eine transparente Laserschutzlackschicht 5, eine Farblackschicht 6 und ein Kleberschicht 9 umfasst und wobei die transparente Laserschutzlackschicht 5 zwischen der Farblackschicht 4 und der Farblackschicht 6 angeordnet ist. Bezüglich der weiteren Ausgestaltung der Transferfolie 2 sowie der Dekorfolie 1 ist hier auf obige Ausführungen verwiesen. In einem weiteren in Fig. 6b gezeigten Schritt wird die Dekorfolie 1 auf das Kunststoffformteil 3 aufgebracht. Bevorzugt werden zum Aufbringen der Dekorfolie 1 Transferverfahren, insbesondere Heiß- und/oder Kalttransferverfahren, wie beispielsweise Heißprägen, In-Mould-Decoration, Insert-Moulding, Print-Mould-Design, In-Mould-Labeling, Laminieren und/oder Aufkleben, verwendet. In einem in Fig. 6c gezeigten Schritt, wird anschließend zumindest die Farblackschicht 4 in den Bereichen 16a mittels eines Lasers entfernt. Wie in Fig. 6c gezeigt, ist die Farblackschicht 4 auf der dem Betrachter zugewandten Seite des Kunststoffformteils 3 angeordnet.

Weiter ist auch, wie in Fig. 6c gezeigt, in den Bereichen 16a weiter die in Betrachtungsrichtung oberhalb der zumindest einen ersten Farblackschicht 4 angeordnete Schutzlackschicht 8 vollständig entfernt.

Unter teilweise entfernt wird hierbei bevorzugt verstanden, dass die teilweise entfernte Schicht derart verändert bzw. zerstört wird, dass diese ihre vorbestimmten Eigenschaften nicht mehr erfüllt. So erfüllt beispielsweise eine teilweise entfernte Schutzlackschicht 8 nicht mehr ihre vorbestimmte Eigenschaft darunter angeordnete Schicht vor chemischen, physikalischen und/oder mechanischen Umwelteinflüssen zu schützen.

Unter vollständig entfernt wird hierbei bevorzugt verstanden, dass die vollständig entfernten Schichten in den entsprechenden Bereichen rückstandslos abgetragen und/oder ablatiert und/oder verbrannt und/oder verdampft werden. Wird so beispielsweise die Farblackschicht 4 in den Bereichen 16a, insbesondere mittels Laserschneiden und/oder Laserablation, vollständig entfernt, so ist die Farblackschicht 4 in den Bereichen 16a rückstandslos abgetragen.

So ist es möglich, dass in den Bereichen 16a die in Betrachtungsrichtung oberhalb der zumindest einen ersten Farblackschicht 4 angeordnete Schutzlackschicht 8 derart entfernt ist, dass in den Bereichen 16a unterhalb der Schutzlackschicht 8 angeordnete Schichten, insbesondere die transparente Laserschutzlackschicht 5 und/oder die Farblackschicht 6, nicht mehr chemischen, physikalischen und/oder mechanischen Umwelteinflüssen geschützt sind. In anderen Worten sind in diesem Fall die transparenten Laserschutzlackschicht 5 und/oder die Farblackschicht 6 den chemischen, mechanischen und/oder physikalischen Umwelteinflüssen ausgesetzt, so dass nun die transparente Laserschutzlackschicht 5 die Funktion erfüllt, die unterhalb dieser angeordneten Schicht zu schützen.

Ferner ist es auch möglich, wenn in dem Schritt c) in den Bereichen 16a alle in Betrachtungsrichtung oberhalb der transparenten Laserschutzlackschicht 5 angeordneten Schichten vollständig entfernt werden.

Weiter wird eine elektrische Funktionsschicht mit einer elektrischen Funktionsstruktur auf der dem Betrachter abgewandten Seite der Farblackschicht 6 angeordnet, wobei die elektrische Funktionsstruktur ein Touchsensorfeld ausbildet, welches eine Tastfeldfunktionalität bereitstellt.

Vorzugsweise wird die elektrische Funktionsschicht mit der elektrischen Funktionsstruktur zwischen der Dekorfolie 1 und dem Kunststoffformteil 3 angeordnet. Die elektrische Funktionsschicht ist auf der der transparenten Laserschutzlackschicht 5 abgewandten Seite der Farblackschicht 6 angeordnet ist.

Hierbei ist es von Vorteil, wenn die elektrische Funktionsschicht mit der elektrischen Funktionsstruktur fest mit der Dekorfolie 1 und dem Kunststoffformteil 3 verbunden werden.

Ferner ist es auch möglich, dass weiter eine Hinterleuchtungsvorrichtung, insbesondere umfassend organische Leuchtdioden (OLED), anorganische Leuchtdioden (LED), MikroLEDs (mLED) und/oder Quantenpunkt-Leuchtdioden (QLED), bevorzugt auf der von der Dekorfolie 1 abgewandten Seite des Kunststoffformteils 3 angeordnet wird. Zweckmäßigerweise wird die Hinterleuchtungsvorrichtung fest angebracht, insbesondere geklebt oder laminiert.

Die Hinterleuchtungsvorrichtung kann alternativ oder ergänzend auch Glühlampen, Halogenlampen, Gasentladungslampen und/oder Leuchtstofflampen, insbesondere Induktionslampen, umfassen.

Weniger bevorzugt umfasst die Hinterleuchtungsvorrichtung Laser und/oder chemisch-physikalische Leuchtmittel, wie beispielsweise Leuchtfarben oder Knicklichter.

Weiter ist es möglich, dass insbesondere nach den oben ausgeführten Schritten zum Dekorieren eines Kunststoffformteils 3 weitere Schritte insbesondere zur Weiterbearbeitung des Kunststoffformteils 3, durchgeführt werden. So es beispielsweise möglich, dass das Kunststoffformteil 3, insbesondere das mit der Dekorfolie 1 dekorierte Kunststoffformteil 3, mit einem der weiteren Schritte ausgewählt aus: Lackieren mit weiteren Schichten, PU-Überfluten, Überspritzen oder Überziehen mit einer weiteren Kunststoffkomponente, Fräsen, Stanzen, Tiefziehen, Polieren und/oder Prägen, weiter bearbeitet wird.

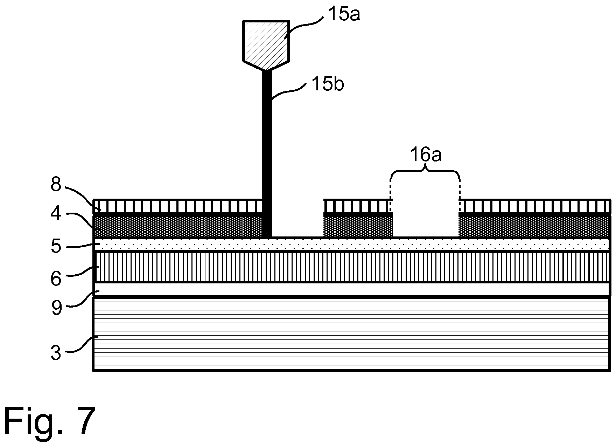

Fig. 7 zeigt schematisch einen Verfahrensschritt der während des Verfahrens zum Dekorieren eines Kunststoffformteils 3 ausgeführt wird. Bei dem in Fig. 7 gezeigten Verfahrensschritt handelt es sich um eine Detailansicht des oben genannten Schritts des Entfernens zumindest der Farblackschicht 4 in den Bereichen 16a mittels eines Lasers 15a.

Wie in Fig. 7 gezeigt, wird zumindest die Farblackschicht 4 mittels eines Lasers 15a entfernt. Weiter wird auch die auf der Farblackschicht 4 angeordnete und die Oberfläche des Kunststoffformteils 3 ausbildende Schutzlackschicht 8, wie oben darlegt, vollständig entfernt.

Bevorzugt wird hierbei ein Laser 15a mit einem Strahldurchmesser im Fokuspunkt von mindestens 50 µm, bevorzugt mindestens 100 µm, verwendet.

Auch ist es möglich, den Laserstrahl 15b mittels ein oder mehreren Linsen, insbesondere mit einer Brennweite zwischen 100 mm und 500 mm, bevorzugt zwischen 200 mm und 300 mm, weiter bevorzugt von 254 mm, zu fokussieren.

Weiter ist es bevorzugt, wenn ein Laser 15a, insbesondere Faserlaser, verwendet wird, wobei der Laser 15a kohärentes Licht aus dem Infrarotbereich, bevorzugt dem nahen Infrarotbereich, weiter bevorzugt Licht aus dem Wellenlängenbereich zwischen 780 nm und 1400 nm, noch weiter bevorzugt Licht der Wellenlänge 1064 nm, emittiert.

Vorzugsweise beträgt die Laserleistung zwischen 0,05 W und 100 W, bevorzugt zwischen 1 W und 20 W, weiter bevorzugt zwischen 5 W und 10 W.

Es ist zweckmäßig, wenn der Laserstrahl 15b mittels auslenkbarer Spiegel, insbesondere mittels eines Laser-Scan-Moduls, entlang der Bereiche 16a gelenkt wird.

Gemäß einem weiteren Ausführungsbeispiel der Erfindung wird der Laser 15a mit einer Schreibgeschwindigkeit von maximal 3000 mm/s, bevorzugt mit einer Schreibgeschwindigkeit zwischen 500 mm/s und 2500 mm/s, betrieben und/oder wird der Laser 15a mit einer Pulsfrequenz zwischen 1 Hz und 1000 kHz, bevorzugt zwischen 1 kHz und 200 kHz, betrieben.

Weiter ist es jedoch auch möglich, dass der Laser 15a kontinuierlich betrieben wird. Bevorzugt wird jedoch ein gepulster Laser verwendet, da hierbei insbesondere die thermische Belastung des Kunststoffformteils 3 im Vergleich zu einem kontinuierlich betriebenen Laser verringert wird.

Die Parameter des Lasers 15a werden hierbei insbesondere in Abhängigkeit sowohl der zu entfernenden Schichten 4, 8 als auch der nicht zu entfernenden Schichten 5, 6, 9, 3 gewählt. Insbesondere werden die Parameter in Abhängigkeit der Schichtdicken und des Materials der zu entfernenden Schichten 4,8 und/oder der nicht zu entfernenden Schichten 5, 6, 9, 3 gewählt. So werden die Parameter des Lasers 15a auch von dem Material des Kunststoffformteils 3 beeinflusst, da dieses insbesondere der durch den Laser 15a bzw. Laserstrahl 15b erzeugten Wärme ausgesetzt ist. Um insbesondere eine Verformung des Kunststoffformteils 3 zu verhindern ist deshalb bei Wahl der Laserparameter auch das Material des Kunststoffformteils 3 zu berücksichtigen. Weiter wird insbesondere die Eindringtiefe des Lasers 15a bzw. des Laserstrahls 15b durch die Parameter Schreibgeschwindigkeit, Pulsfrequenz und Laserleistung beeinflusst. Weiter werden die Laserparameter vorteilhafterweise auch in Abhängigkeit der Ausgestaltung zu entfernenden Bereiche 16a gewählt. Hierbei sind insbesondere das Layout, die Layoutgröße, die Linienstärke und Fülleffekte zu nennen. Dazu zählen beispielsweise unter anderem die Anzahl und Laserrichtung von Füllungen, Wiederholungen von Umrissen und Füllungen sowie die Reihenfolge der einzelnen Bestandteile des Layouts.

Im Folgenden sind bespielhafte Laserparameter für ein mit einer Dekorfolie 1 dekoriertes Kunststoffformteil 3 aus transparentem ABS angegeben, welches gemäß obigen Verfahren bearbeitet wird:
- Laserleistung: 8 W
- Laserfrequenz: 50 kHz
- Schreibgeschwindigkeit: 2000 mm/s
- Wellenlänge: 1064 nm

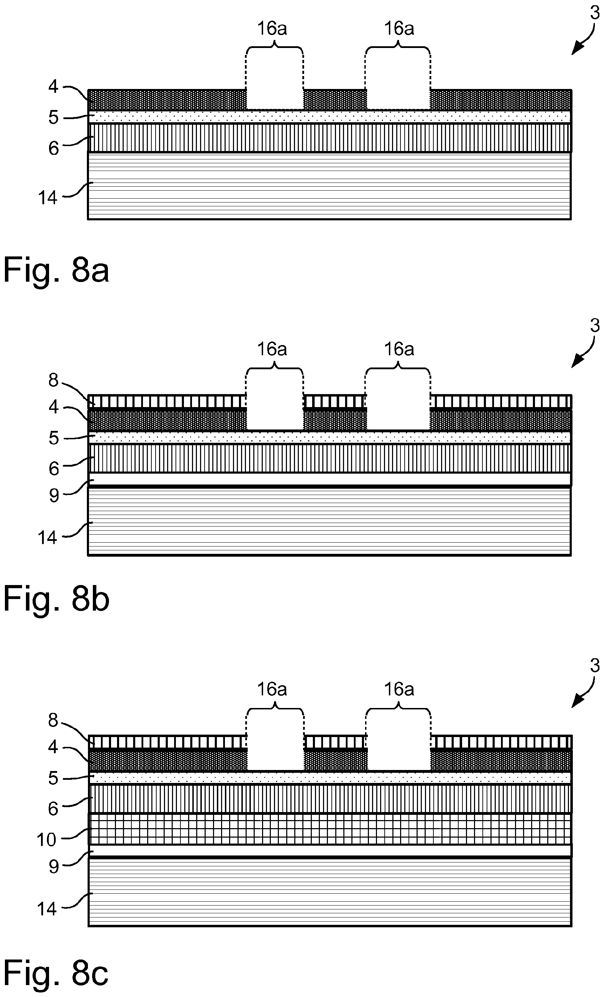

Fig. 8a bis Fig. 8e zeigen schematisch Schnittdarstellungen eines Kunststoffformteils 3.

Das in Fig. 8a gezeigte Kunststoffformteil 3 umfasst eine Dekorfolie 1. Die Dekorfolie 1 umfasst hierbei die Farblackschicht 4, die Farblackschicht 6 und die transparente Laserschutzlackschicht 5, wobei die transparente Laserschutzlackschicht 5 zwischen der Farblackschicht 4 und der Farblackschicht 6 angeordnet ist. Weiter ist die einem Betrachter zugewandte Farblackschicht 4 in den Bereichen 16a mittels eines Lasers entfernt. Bezüglich der Ausgestaltung der Schichten 4, 5 und 6 ist hier auf obige Ausführungen verwiesen.

Weiter ist es von Vorteil, wenn das Kunststoffformteil, wie in Fig. 8a gezeigt, eine Schicht aus einem thermoplastischen Material 14 aufweist, welche auf der dem Betrachter abgewandten Seite der Farblackschicht 6 angeordnet ist. So ist es möglich, dass die zumindest eine Schicht aus einem thermoplastischen Material 14 auf der dem Betrachter abgewandten Farblackschicht 6 angeordnet ist.

Die Bereiche 16a weisen bevorzugt bei Betrachtung senkrecht auf die Dekorfolie 1 eine Linienstärke von mindestens 50 µm, bevorzugt von mindestens 100 µm, auf. Es ist jedoch auch möglich, dass die Bereiche 16a bei Betrachtung senkrecht auf die Dekorfolie 1 eine Linienstärke von maximal 2 mm, bevorzugt von maximal 1 mm, weiter bevorzugt von maximal 0,5 mm, aufweisen.

Bezüglich der weiteren Ausgestaltung der Bereiche 16a ist hier auf obige Ausführungen verwiesen.

Weiter ist es möglich, dass das Kunststoffformteil 3 eine Schichtdicke zwischen 0,5 mm bis 10 mm, bevorzugt zwischen 0,8 mm und 5 mm, aufweist.

Vorzugsweise ist die Schicht aus einem thermoplastischen Material 14 transparent, insbesondere weist die Schicht aus einem thermoplastischen Material 14 eine Transparenz zwischen 5 % und 98 %, insbesondere im Wellenlängenbereich zwischen 380 nm bis 780 nm, auf.

Die Schicht aus einem thermoplastischen Material 14 ist bevorzugt gebildet aus einem der folgenden Materialien: ABS, PC, ABS/PC, PC/ABS, PMMA, Polypropylen (PP), PA, thermoplastisches Polyurethan (TPU).

Weiter ist es denkbar, dass die Schicht aus einem thermoplastischen Material 14 eingefärbt ist, insbesondere dass die Schicht aus einem thermoplastischen Material 14 mittels Farbstoffen und/oder Farbpigmenten eingefärbt ist. Bevorzugt beträgt der Pigmentierungsgrad der Schicht aus einem thermoplastischen Material 14 weniger als 15 %, bevorzugt weniger als 10 %, weiter bevorzugt weniger als 5 %.

Das in Fig. 8b gezeigte Kunststoffformteil 3 entspricht dem in Fig. 8a gezeigten Kunststoffformteil 3 mit dem Unterschied, dass das Kunststoffformteil 3, insbesondere die von dem Kunststoffformteil 3 umfasste Dekorfolie 1, weiter die Schutzlackschicht 8 und die Kleberschicht 9 umfasst, wobei die Schutzlackschicht 8 in den Bereichen 16a, wie oben dargelegt, vollständig entfernt ist. Bezüglich der Ausgestaltung der Schutzlackschicht 8 und der Kleberschicht 9 ist hier auf obige Ausführungen verwiesen.

Das in Fig. 8c gezeigte Kunststoffformteil 3 entspricht dem in Fig. 8b gezeigten Kunststoffformteil 3 mit dem Unterschied, dass das Kunststoffformteil 3, insbesondere die von dem Kunststoffformteil 3 umfasste Dekorfolie 1, weiter die elektrische Funktionsschicht 10 mit einer elektrischen Funktionsstruktur auf der einem Betrachter abgewandten Farblackschicht 6 aufweist, wobei die Funktionsstruktur ein Touchsensorfeld ausbildet, welches eine Tastfeldfunktionalität bereitstellt.

Wie in Fig. 8c gezeigt, ist die Funktionsschicht 10 mit der elektrischen Funktionsstruktur zwischen der Dekorfolie 1 und der Schicht aus thermoplastischen Material 14 angeordnet. So ist die Funktionsschicht 10 bevorzugt auf der der transparenten Laserschutzlackschicht 5 abgewandten Seite der Farblackschicht 6 angeordnet.

Bezüglich weiterer möglicher Ausgestaltungen der elektrischen Funktionsschicht 10 mit der elektrischen Funktionsstruktur ist hier auf obige Ausführungen verwiesen.

So bildet das in Fig. 8c gezeigte Kunststoffformteil 3, insbesondere das mit der Dekorfolie 1 dekorierte Kunststoffformteil 3, beispielsweise ein Touchsensor aus.

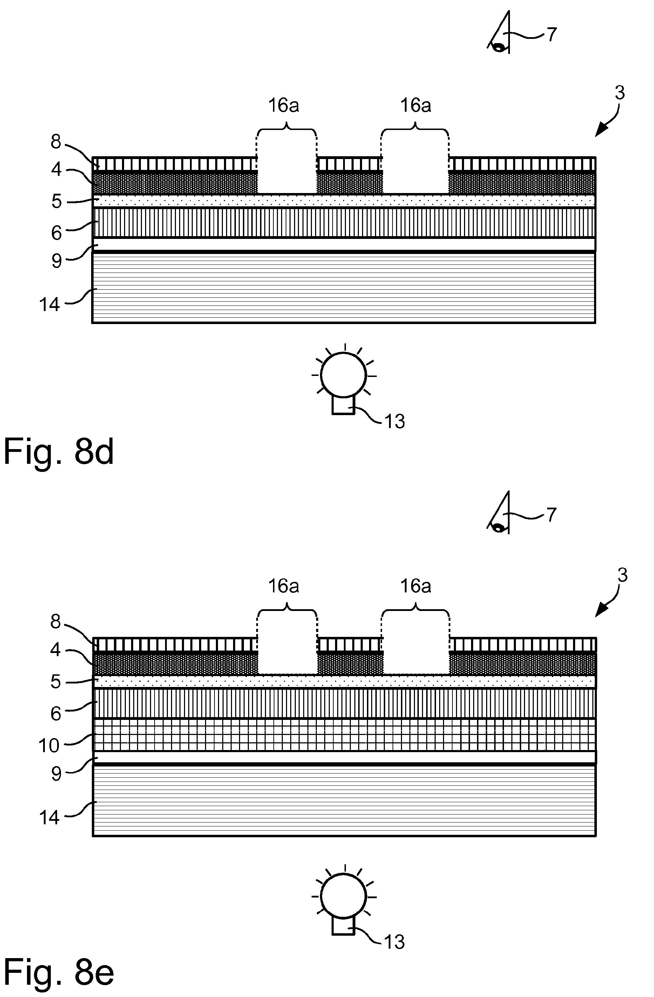

Das in Fig. 8d gezeigte Kunststoffformteil 3 entspricht ebenfalls dem in Fig. 8b gezeigten Kunststoffformteil mit dem Unterschied, dass das Kunststoffformteil 3 weiter eine Hinterleuchtungsvorrichtung 13, insbesondere umfassend organische Leuchtdioden (OLED), anorganische Leuchtdioden (LED),MikroLEDs (mLED) und/oder Quantenpunkt-Leuchtdioden (QLED), aufweist, wobei die Hinterleuchtungsvorrichtung 13 bevorzugt auf der von der Dekorfolie 1 abgewandten Seite der Schicht aus thermoplastischen Material 14 angeordnet ist.

Bezüglich weiterer möglicher Ausgestaltungen der Hinterleuchtungsvorrichtung 13 ist hier auf obige Ausführungen verwiesen.

Das in Fig. 8e gezeigte Kunststoffformteil 3 entspricht dem in Fig. 8c gezeigten Kunststoffformteil mit dem Unterschied, dass das Kunststoffformteil 3 weiter, wie das in Fig. 8d gezeigte Kunststoffformteil 3, eine Hinterleuchtungsvorrichtung 13 aufweist, wobei die Hinterleuchtungsvorrichtung 13 bevorzugt auf der von der Dekorfolie 1 abgewandten Seite der Schicht aus thermoplastischen Material 14 angeordnet ist.

Auch hier ist bezüglich möglicher Ausgestaltungen der Hinterleuchtungsvorrichtung 13 und/oder der elektrischen Funktionsschicht 10 mit der elektrischen Funktionsstruktur auf obige Ausführungen verwiesen.

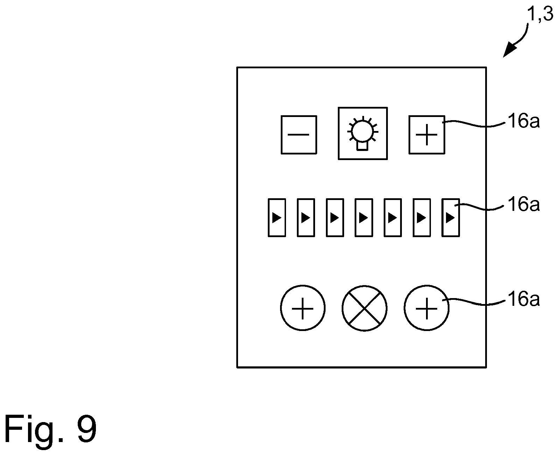

Fig. 9 zeigt schematisch eine Draufsicht auf eine Dekorfolie 1 und/oder auf ein Kunststoffformteil 3, welches eine Dekorfolie 1 umfasst. Wie in Fig. 9 gezeigt, weist die Dekorfolie 1 und/oder das die Dekorfolie 1 umfassende Kunststoffformteil 3 Bereiche 16a auf, in welchen zumindest die Farblackschicht 4, 4a, 4b mittels eines Lasers entfernt wurde. Die Bereiche 16a bilden, wie in Fig. 9 gezeigt, Dekorelemente, wie beispielsweise Symbole oder Schriftzüge, aus. So bilden die Bereiche 16a beispielsweise, wie in Fig. 9 gezeigt, Symbole aus. Es ist jedoch auch möglich, dass die Bereiche Muster und/oder Logos und/oder alphanummerische Zeichen darstellen.

Die Fig. 9 stellt einerseits die Draufsicht auf eine Dekorfolie 1 dar, bei welcher in den Bereichen 16a die einem Betrachter zugewandte Farblackschicht 4, 4a, 4b entfernt, insbesondere vollständig entfernt, ist, so dass insbesondere in den Bereichen 16a die transparente Laserschutzlackschicht 5 freigelegt ist. Weiter stellt die Fig. 9 auch die Draufsicht auf ein Kunststoffformteil 3, welches eine Dekorfolie 1, umfasst, welche ebenfalls, wie oben dargelegt, auf das Kunststoffformteil aufgebracht ist und entsprechend obiger Ausführungen ausgestaltet ist. Es kann sich also in Fig. 9 sowohl um die Draufsicht einer Dekorfolie 1 handeln als auch um die Draufsicht eines mit einer Dekorfolie 1 dekorierten Kunststoffformteils 3 handeln.

Bezüglich der weiteren Ausgestaltung der Bereiche 16a und/oder der Dekorfolie 1 und/oder des Kunststoffformteils 3, insbesondere bezüglich möglicher Schichtaufbauten der Dekorfolie 1 und/oder des Kunststoffformteils 3, ist hier auf obige Ausführungen verwiesen.

### Bezugszeichenliste

- 1: Dekorfolie
- 2: Transferfolie
- 3: Kunststoffformteil
- 4, 4a, 4b: erste Farblackschicht(en)
- 5: transparente Laserschutzlackschicht
- 6, 6a, 6b: zweite Farblackschicht(en)
- 7: Betrachter
- 8: Schutzlackschicht
- 9: Kleberschicht
- 10: elektrische Funktionsschicht
- 11: Trägerfolie
- 12: Ablöseschicht
- 13: Hinterleuchtungsmittel
- 14: Schicht aus thermoplastischem Material
- 15a, 15b: Laser, Laserstrahl
- 16a, 16b, 16c: Bereiche
- 17a, 17b: einfallendes Licht, gestreutes Licht

## Patentansprüche

1. Dekorfolie (1), insbesondere zur Dekoration eines Kunststoffformteils (3), umfassend zumindest eine erste Farblackschicht (4, 4a, 4b), zumindest eine zweite Farblackschicht (6, 6a, 6b) und eine transparente Laserschutzlackschicht (5), wobei die transparente Laserschutzlackschicht (5) zwischen der zumindest einen ersten Farblackschicht (4, 4a, 4b) und der zumindest einen zweiten Farblackschicht (6, 6a, 6b) angeordnet ist,
wobei die zumindest eine zweite Farblackschicht (6, 6a, 6b) eine Transmission von mindestens 10 % aufweist, und wobei in ein oder mehreren ersten Bereichen (16a) die einem Betrachter (7) zugewandte zumindest eine erste Farblackschicht (4, 4a, 4b) derart entfernt ist, dass die transparente Laserschutzlackschicht (5) freigelegt ist, **dadurch gekennzeichnet,**
**dass** die zumindest eine zweite Farblackschicht (6, 6a, 6b) mehr als 50 % des transmittierten Lichts um mehr als 2,5° von der Richtung des einfallenden Lichtstrahls ablenkt,
**dass** die Dekorfolie (1) ein oder mehrere elektrische Funktionsschichten (10) mit mindestens einer elektrischen Funktionsstruktur auf der dem Betrachter (7) abgewandten Seite der zumindest einen zweiten Farblackschicht aufweist, wobei die mindestens eine elektrische Funktionsstruktur ein Touchsensorfeld ausbildet, welches eine Tastfeldfunktionalität bereitstellt,
**dass** die Dekorfolie (1) weiter eine Schutzlackschicht (8) umfasst, wobei die Schutzlackschicht (8) auf der einem Betrachter (7) zugewandten Seite der Dekorfolie (1) angeordnet ist, und dass in den ein oder mehreren ersten Bereichen (16a) weiter die Schutzlackschicht (8) vollständig entfernt ist.

2. Dekorfolie (1) nach Anspruch 1,
**dadurch gekennzeichnet,**
**dass** in den ein oder mehreren ersten Bereichen (16a) die, einem Betrachter (7) zugewandte, zumindest eine erste Farblackschicht (4, 4a, 4b) vollständig entfernt ist.

3. Dekorfolie (1) nach einem der vorhergehenden Ansprüche,
**dadurch gekennzeichnet,**
**dass** die transparente Laserschutzlackschicht (5) transmittiertes Licht, insbesondere Licht im Wellenlängenbereich zwischen 380 nm und 780 nm, diffus streut, und/oder dass die transparente Laserschutzlackschicht (5) einen Haze-Wert von höchstens 50 Haze-Units, bevorzugt von höchstens 20 Haze-Units, aufweist, und/oder
**dass** die transparente Laserschutzlackschicht (5) ein milchig-trübes Erscheinungsbild aufweist und/oder dass die transparente Laserschutzlackschicht (5) mehr als 30 %, bevorzugt mehr als 45 %, weiter bevorzugt mehr als 65 %, des transmittierten Lichts, insbesondere aus dem Wellenlängenbereich zwischen 380 nm und 780 nm, um mehr als 2,5° von der Richtung des einfallenden Lichtstrahls ablenkt.

4. Dekorfolie (1) nach einem der vorhergehenden Ansprüche,
**dadurch gekennzeichnet,**
**dass** die transparente Laserschutzlackschicht (5) eine Schicht aus Monomeren, Oligomeren, Polymeren und/oder Copolymeren, bevorzugt umfassend Polymethylmethacrylat (PMMA), Polyester, Polycarbonat (PC), Polyamid (PA), Polyurethane (PU) und/oder Polyvinylchlorid (PVC), weiter bevorzugt umfassend PU und/oder PVC, ist und/oder dass die transparente Laserschutzlackschicht (5) Polyacrylat als Bindemittel aufweist, und/oder dass die die transparente Laserschutzlackschicht (5) Polyetherimide (PEI) und/oder Polysulfone, insbesondere Poly(arylethersulfon)e (PAES), aufweist.

5. Dekorfolie (1) nach einem der vorhergehenden Ansprüche,
**dadurch gekennzeichnet,**
**dass** die transparente Laserschutzlackschicht (5) die zumindest eine zweite Farblackschicht (6, 6a, 6b), insbesondere die von einem Betrachter (7) aus gesehen unterhalb der transparenten Laserschutzlackschicht (5) liegenden Schichten, vor mechanischen, physikalischen und/oder chemischen Umwelteinflüssen schützt.

6. Dekorfolie (1) nach einem der vorhergehenden Ansprüche,
**dadurch gekennzeichnet,**
**dass** die zumindest eine erste Farblackschicht (4, 4a, 4b) opak ausgebildet ist und/oder dass die zumindest eine erste Farblackschicht (4, 4a, 4b) eine Transmission, insbesondere im Wellenlängenbereich zwischen 380 nm bis 780 nm, von maximal 50 %, bevorzugt von maximal 20 %, weiter bevorzugt von maximal 5 %, aufweist, und/oder
**dass** die zumindest eine erste Farblackschicht (4, 4a, 4b) mehrschichtig ist, insbesondere dass die zumindest eine erste Farblackschicht (4, 4a, 4b) aus zwei oder mehreren ersten Teilschichten (4b) ausgebildet ist, wobei die zwei oder mehreren ersten Teilschichten (4b) bevorzugt jeweils eine Schichtdicke zwischen 0,1 µm und 50 µm, weiter bevorzugt zwischen 0,5 µm und 5,0 µm, aufweisen.

7. Dekorfolie (1) nach einem der vorhergehenden Ansprüche,
**dadurch gekennzeichnet,**
**dass** die zumindest eine zweite Farblackschicht (6, 6a, 6b) transparent ausgebildet ist und/oder dass die zumindest eine zweite Farblackschicht (6, 6a, 6b) eine Transmission, insbesondere im Wellenlängenbereich zwischen 380 nm bis 780 nm, von mindestens 25 %, bevorzugt von mindestens 75 %, weiter bevorzugt von mindestens 90 %, aufweist, und/oder dass die zumindest eine zweite Farblackschicht (6, 6a, 6b) mehrschichtig ist, insbesondere dass die zumindest eine zweite Farblackschicht (6, 6a, 6b) aus zwei oder mehreren zweiten Teilschichten (6b) ausgebildet ist, wobei die zwei oder mehreren zweiten Teilschichten (6b) bevorzugt jeweils eine Schichtdicke zwischen 0,1 µm und 50 µm, weiter bevorzugt zwischen 1,0 µm und 5,0 µm, aufweisen.

8. Dekorfolie (1) nach einem der vorhergehenden Ansprüche,
**dadurch gekennzeichnet,**
**dass** die zumindest eine zweite Farblackschicht (6, 6a, 6b), insbesondere Licht im Wellenlängenbereich zwischen 380 nm und 780 nm, diffus streut, und/oder dass die zumindest eine zweite Farblackschicht (6, 6a, 6b) einen Haze-Wert von mindestens 50 Haze-Units, bevorzugt von mindestens 75 Haze-Units, aufweist, und/oder
**dass** die zumindest eine zweite Farblackschicht (6, 6a, 6b) mehr als 75 %, bevorzugt mehr als 85 %, des transmittierten Lichts, insbesondere aus dem Wellenlängenbereich zwischen 380 nm und 780 nm, um mehr als 2,5° von der Richtung des einfallenden Lichtstrahls ablenkt.

9. Dekorfolie (1) nach Anspruch 8,
**dadurch gekennzeichnet,**
**dass** Schutzlackschicht (8) klar ist, insbesondere dass die Schutzlackschicht (8) transmittiertes Licht, insbesondere Licht im Wellenlängenbereich zwischen 380 nm und 780 nm, um weniger als 8 %, bevorzugt um weniger als 4 %, durch Streuung ablenkt.

10. Dekorfolie (1) nach einem der vorhergehenden Ansprüche,
**dadurch gekennzeichnet,**
**dass** die mindestens eine elektrische Funktionsstruktur ein kapazitives Sensorfeld ausbildet.

11. Dekorfolie (1) nach einem der vorhergehenden Ansprüche,
**dadurch gekennzeichnet,**
**dass** alle in Betrachtungsrichtung unterhalb der transparenten Laserschutzlackschicht (5) angeordneten Schichten transparent sind, insbesondere dass alle unterhalb der transparenten Laserschutzlackschicht (5) angeordneten Schichten eine Transmission von mindestens 25 %, bevorzugt von mindestens 45 %, aufweisen.

12. Verfahren zum Dekorieren eines Kunststoffformteils (3) umfassend die folgende Schritte, welche insbesondere in der folgenden Reihenfolge ausgeführt werden:
a) Bereitstellen einer Dekorfolie (1), wobei die Dekorfolie (1) zumindest eine erste Farblackschicht (4, 4a, 4b), zumindest eine zweite Farblackschicht (6, 6a, 6b) und eine transparente Laserschutzlackschicht (5) umfasst, wobei die transparente Laserschutzlackschicht (5) zwischen der zumindest einen ersten Farblackschicht (4, 4a, 4b) und der zumindest einen zweiten Farblackschicht (6, 6a, 6b) angeordnet ist;
b) Aufbringen der Dekorfolie (1) auf das Kunststoffformteil (3), bevorzugt mittels Heiß- oder Kalttransferverfahren, weiter bevorzugt mittels Heißprägen und/oder In-Mould-Verfahren;
c) Entfernen zumindest der einem Betrachter (7) zugewandten ersten Farblackschicht in ein oder mehreren ersten Bereichen mittels eines Lasers,
wobei die zumindest eine zweite Farblackschicht (6, 6a, 6b) eine Transmission von mindestens 10 % aufweist,
dass die zumindest eine zweite Farblackschicht (6, 6a, 6b) mehr als 50 % des transmittierten Lichts um mehr als 2,5° von der Richtung des einfallenden Lichtstrahls ablenkt,
wobei das Verfahren weiter folgenden Schritt umfasst: d) Anordnen ein oder mehrerer elektrischer Funktionsschichten (10) mit mindestens einer elektrischen Funktionsstruktur auf der dem Betrachter (7) abgewandten Seite der zumindest einen zweiten Farblackschicht (6, 6a, 6b), wobei die mindestens eine elektrische Funktionsstruktur ein Touchsensorfeld ausbildet, welches eine Tastfeldfunktionalität bereitstellt,
wobei in dem Schritt c) die zumindest eine erste Farblackschicht (4, 4a, 4b) in den ein oder mehreren ersten Bereichen (16a) mittels des Lasers (15a) derart entfernt wird, dass die transparente Laserschutzlackschicht (5) freigelegt wird,
wobei Dekorfolie (1) weiter eine Schutzlackschicht (8) umfasst, die auf der einem Betrachter (7) zugewandten Seite der Dekorfolie (1) angeordnet ist, und wobei in den ein oder mehreren ersten Bereichen (16a) weiter die Schutzlackschicht (8) vollständig entfernt wird.

13. Verfahren nach Anspruch 12,
**dadurch gekennzeichnet,**
**dass** in dem Schritt c) in den ein oder mehreren ersten Bereichen (16a) alle in Betrachtungsrichtung oberhalb der transparenten Laserschutzlackschicht (5) angeordneten Schichten entfernt, insbesondere vollständig entfernt, werden.

14. Verfahren nach einem der Ansprüche 12 oder 13,
**dadurch gekennzeichnet,**
**dass** der Schritt d) zwischen Schritt a) und b) durchgeführt wird, und/oder
**dass** das Verfahren weiter folgenden Schritt umfasst:
e) Anordnen einer Hinterleuchtungsvorrichtung (13), insbesondere umfassend organische Leuchtdioden (OLED), anorganische Leuchtdioden (LED), MikroLEDs (mLED) und/oder Quantenpunkt-Leuchtdioden (QLED), wobei die Hinterleuchtungsvorrichtung bevorzugt auf der von der Dekorfolie (1) abgewandten Seite des Kunststoffformteils (3) angeordnet wird.

15. Kunststoffformteil (3) umfassend eine Dekorfolie (1), wobei die Dekorfolie (1) zumindest eine erste Farblackschicht (4, 4a, 4b), zumindest eine zweite Farblackschicht (6, 6a, 6b) und eine transparente Laserschutzlackschicht (5) umfasst, wobei die transparente Laserschutzlackschicht (5) zwischen der zumindest einen ersten Farblackschicht (4, 4a, 4b) und der zumindest einen zweiten Farblackschicht (6, 6a, 6b) angeordnet ist,
wobei die zumindest eine zweite Farblackschicht (6, 6a, 6b) eine Transmission von mindestens 10 % aufweist,
wobei die zumindest eine zweite Farblackschicht (6, 6a, 6b) mehr als 50 % des transmittierten Lichts um mehr als 2,5° von der Richtung des einfallenden Lichtstrahls ablenkt,
wobei das Kunststoffformteil (3) ein oder mehrere elektrische Funktionsschichten (10) mit mindestens einer elektrischen Funktionsstruktur auf der dem Betrachter (7) abgewandten zumindest einen zweiten Farblackschicht (6, 6a, 6b) aufweist, wobei die mindestens eine elektrische Funktionsstruktur (10) ein Touchsensorfeld ausbildet, welches eine Tastfeldfunktionalität bereitstellt,
wobei die einem Betrachter (7) zugewandte zumindest eine erste Farblackschicht (4, 4a, 4b) in ein oder mehreren ersten Bereichen (16a) mittels eines Lasers (15a) entfernt ist,
wobei die Dekorfolie (1) weiter eine Schutzlackschicht (8) umfasst, wobei die Schutzlackschicht (8) auf der einem Betrachter (7) zugewandten Seite der Dekorfolie (1) angeordnet ist, und wobei in den ein oder mehreren ersten Bereichen (16a) weiter die Schutzlackschicht (8) vollständig entfernt ist.

## Claims

1. Decorative film (1), in particular for decorating a plastic moulded article (3), comprising at least one first coloured lacquer layer (4, 4a, 4b), at least one second coloured lacquer layer (6, 6a, 6b) and a transparent laser protection lacquer layer (5), wherein the transparent laser protection lacquer layer (5) is arranged between the at least one first coloured lacquer layer (4, 4a, 4b) and the at least one second coloured lacquer layer (6, 6a, 6b),
wherein the at least one second coloured lacquer layer (6, 6a, 6b) has a transmission of at least 10%, and wherein in one or more first regions (16a), the at least one first coloured lacquer layer (4, 4a, 4b) facing an observer (7) is removed in such a way that the transparent laser protection lacquer layer (5) is exposed, **characterised in that**
the at least one second coloured lacquer layer (6, 6a, 6b) deflects more than 50% of the transmitted light by more than 2.5° from the direction of the incidental beam of light,
the decorative film (1) has one or more electrical functional layers (10) having at least one electrical functional structure on the side of the at least one second coloured lacquer layer facing away from the observer (7), wherein
the at least one electrical functional structure forms a touch sensor pad, which provides a touchpad function,
the decorative film (1) further comprises a protective lacquer layer (8),
wherein the protective lacquer layer (8) is arranged on the side of the decorative film (1) facing an observer (7), and furthermore the protective lacquer layer (8) is completely removed in the one or more first regions (16a).

2. Decorative film (1) according to claim 1,
**characterised in that**,
in the one or more first regions (16a), the at least one first coloured lacquer layer (4, 4a, 4b) facing an observer (7) is completely removed.

3. Decorative film (1) according to one of the preceding claims,
**characterised in that**
the transparent laser protection lacquer layer (5) diffusely scatters transmitted light, in particular light in the wavelength range between 380nm and 780nm, and/or the transparent laser protection lacquer layer (5) has a haze value of a maximum of 50 haze units, preferably a maximum of 20 haze units, and/or
the transparent laser protection lacquer layer (5) has a milky-murky appearance and/or the transparent laser protection lacquer layer (5) deflects more than 30%, preferably more than 45%, further preferably more than 65%, of the transmitted light, in particular from the wavelength range between 380nm and 780nm, by more than 2.5° from the direction of the incidental beam of light.

4. Decorative film (1) according to one of the preceding claims,
**characterised in that**
the transparent laser protection lacquer layer (5) is a layer of monomers, oligomers, polymers and/or copolymers, preferably comprising polymethyl methacrylate (PMMA), polyester, polycarbonate (PC), polyamide (PA), polyurethane (PU) and/or polyvinyl chloride (PVC), further preferably comprising PU and/or PVC, and/or the transparent laser protection lacquer layer (5) has polyacrylate as a binder, and/or the transparent laser protection lacquer layer (5) has polyetherimides (PEI) and/or polysulfones, in particular poly(aryl ether sulfone)s (PAES).

5. Decorative film (1) according to one of the preceding claims,
**characterised in that**
the transparent laser protection lacquer layer (5) protects the at least one second coloured lacquer layer (6, 6a, 6b), in particular the layers lying below the transparent laser protection lacquer layer (5) as seen by an observer (7), from mechanical, physical and/or chemical environmental influences.

6. Decorative film (1) according to one of the preceding claims,
**characterised in that**
the at least one first coloured lacquer layer (4, 4a, 4b) is formed to be opaque, and/or that the at least one first coloured lacquer layer (4, 4a, 4b) has a transmission, in particular in the wavelength range between 380nm and 780nm, of a maximum of 50%, preferably a maximum of 20%, further preferably a maximum of 5%, and/or
the at least one first coloured lacquer layer (4, 4a, 4b) is multi-layered, in particular the at least one first coloured lacquer layer (4, 4a, 4b) is formed of two or more first partial layers (4b), wherein the two or more first partial layers (4b) preferably each have a layer thickness between 0.1µm and 50µm, further preferably between 0.5µm and 5.0µm.

7. Decorative film (1) according to one of the preceding claims,
**characterised in that**
the at least one second coloured lacquer layer (6, 6a, 6b) is formed to be transparent and/or the at least one second coloured lacquer layer (6, 6a, 6b) has a transmission, in particular in the wavelength range between 380nm and 780nm, of at least 25%, preferably of at least 75%, further preferably of at least 90%, and/or
the at least one second coloured lacquer layer (6, 6a, 6b) is multi-layered, in particular the at least one second coloured lacquer layer (6, 6a, 6b) is formed of two or more second partial layers (6b), wherein the two or more second partial layers (6b) preferably each have a layer thickness between 0.1µm and 50µm, further preferably between 1.0µm and 5.0µm.

8. Decorative film (1) according to one of the preceding claims,
**characterised in that**
the at least one second coloured lacquer layer (6, 6a, 6b) diffusely scatters light, in particular in the wavelength range between 380nm and 780nm, and/or the at least one second coloured lacquer layer (6, 6a, 6b) has a haze value of at least 50 haze units, preferably of at least 75 haze units, and/or
the at least one second coloured lacquer layer (6, 6a, 6b) deflects more than 75%, preferably more than 85%, of the transmitted light, in particular from the wavelength range between 380nm and 780nm, by more than 2.5° from the direction of the incidental beam of light.

9. Decorative film (1) according to claim 8,
**characterised in that**
protective lacquer layer (8) is clear, in particular the protective lacquer layer (8) deflects transmitted light, in particular light in the wavelength range between 380nm and 780nm, by less than 8%, preferably by less than 4%, by scattering.

10. Decorative film (1) according to one of the preceding claims,
**characterised in that**
the at least one electrical functional structure forms a capacitive sensor array.

11. Decorative film (1) according to one of the preceding claims,
**characterised in that**
all layers arranged underneath the transparent laser protection lacquer layer (5) in the observation direction are transparent, in particular all layers arranged underneath the transparent laser protection lacquer layer (5) have a transmission of at least 25%, preferably of at least 45%.

12. Method for decorating a plastic moulded article (3) comprising the following steps, which are in particular carried out in the following order:
a) providing a decorative film (1), wherein the decorative film (1) comprises at least one first coloured lacquer layer (4, 4a, 4b), at least one second coloured lacquer layer (6, 6a, 6b) and a transparent laser protection lacquer layer (5), wherein the transparent laser protection lacquer layer (5) is arranged between the at least one first coloured lacquer layer (4, 4a, 4b) and the at least one second coloured lacquer layer (6, 6a, 6b),
b) applying the decorative film (1) to the plastic moulded article (3), preferably by means of heat or cold transfer methods, further preferably by means of hot stamping and/or in-mould methods;
c) removing at least the first coloured lacquer layer facing an observer (7) in one or more first regions by means of a laser,
wherein
the at least one second coloured lacquer layer (6, 6a, 6b) has a transmission of at least 10%,
the at least one second coloured lacquer layer (6, 6a, 6b) deflects more than 50% of the transmitted light by more than 2.5° from the direction of the incidental beam of light,
wherein the method further comprises the following steps:
d) arranging one or more electrical functional layers (10) having at least one electrical functional layer on the side of the at least one second coloured lacquer layer (6, 6a, 6b) facing away from the observer (7), wherein the at least one electrical functional structure forms a touch sensor pad, which provides a touchpad function,
wherein
in step c), the at least one first coloured lacquer layer (4, 4a, 4b) in the one or more first regions (16a) is removed by means of the laser (15a) in such a way that the transparent laser protection lacquer layer (5) is exposed,
wherein
the decorative film (1) further comprises a protective lacquer layer (8), which is arranged on the side of the decorative film (1) facing an observer (7), and wherein
the protective lacquer layer (8) is further completely removed in the one or more first regions (16a).

13. Method according to claim 12,
**characterised in that**
in step c), all layers arranged above the transparent laser protection lacquer layer (5) in the observation direction in the one or more first regions (16a) are removed, in particular completely removed.

14. Method according to one of claims 12 or 13,
**characterised in that**
step d) is carried out between step a) and b),
and/or
the method further comprises the following step:
e) arranging a backlighting device (13), in particular comprising organic light-emitting diodes (OLEDs), inorganic light-emitting diodes (LEDs), microLEDs (mLEDs) and/or quantum dot light-emitting diodes (QLEDs), wherein the backlighting device is preferably arranged on the side of the plastic moulded article (3) facing away from the decorative film (1).

15. Plastic moulded article (3) comprising a decorative film (1), wherein the decorative film (1) comprises at least one first coloured lacquer layer (4, 4a, 4b), at least one second coloured lacquer layer (6, 6a, 6b) and a transparent laser protection lacquer layer (5), wherein the transparent laser protection lacquer layer (5) is arranged between the at least one first coloured lacquer layer (4, 4a, 4b) and the at least one second coloured lacquer layer (6, 6a, 6b),
wherein the at least one second coloured lacquer layer (6, 6a, 6b) has a transmission of at least 10%,
wherein the at least one second coloured lacquer layer (6, 6a, 6b) deflects more than 50% of the transmitted light by more than 2.5° from the direction of the incidental beam of light,
wherein the plastic moulded article (3) has one or more electrical functional layers (10) having at least one electrical functional structure on the at least one second coloured lacquer layer (6, 6a, 6b) facing away from the observer (7), wherein the at least one electrical functional structure (10) forms a touch sensor pad, which provides a touchpad function,
wherein the at least one first coloured lacquer layer (4, 4a, 4b) facing an observer (7) in one or more first regions (16a) is removed by means of a laser (15a),
wherein the decorative film (1) further comprises a protective lacquer layer (8), wherein the protective lacquer layer (8) is arranged on the side of the decorative film (1) facing an observer (7), and wherein the protective lacquer layer (8) is further completely removed in the one or more first regions (16a).

## Revendications

1. Film décoratif (1), en particulier pour la décoration d'une pièce moulée en matière plastique (3), comprenant au moins une première couche de laque colorée (4, 4a, 4b), au moins une seconde couche de laque colorée (6, 6a, 6b) et une couche de laque de protection au laser (5) transparente, dans lequel la couche de laque de protection au laser (5) transparente est agencée entre l'au moins une première couche de laque colorée (4, 4a, 4b) et l'au moins une seconde couche de laque colorée (6, 6a, 6b), dans lequel l'au moins une seconde couche de laque colorée (6, 6a, 6b) présente une transmission d'au moins 10 %, et dans lequel l'au moins une première couche de laque colorée (4, 4a, 4b) tournée vers un observateur (7) est retirée dans une ou plusieurs premières zones (16a) de telle manière que la couche de laque de protection au laser (5) transparente soit exposée, **caractérisé en ce que**
l'au moins une seconde couche de laque colorée (6, 6a, 6b) dévie plus de 50 % de la lumière transmise de plus de 2,5° de la direction du faisceau lumineux incident,
le film décoratif (1) présente une ou plusieurs couches fonctionnelles (10) électriques avec au moins une structure fonctionnelle électrique sur le côté éloigné de l'observateur (7) de l'au moins une seconde couche de laque colorée, dans lequel
l'au moins une structure fonctionnelle électrique réalise un champ de détection tactile qui fournit une fonctionnalité de champ tactile,
le film décoratif (1) comprend en outre une couche de laque de protection (8), dans lequel la couche de laque de protection (8) est agencée sur le côté tourné vers un observateur (7) du film décoratif (1), et **en ce que** la couche de laque de protection (8) est en outre complètement retirée dans les une ou plusieurs premières zones (16a).

2. Film décoratif (1) selon la revendication 1,
**caractérisé en ce que**
l'au moins une première couche de laque colorée (4, 4a, 4b) tournée vers un observateur (7) est complètement retirée dans les une ou plusieurs premières zones (16a).

3. Film décoratif (1) selon l'une quelconque des revendications précédentes,
**caractérisé en ce que**
la couche de laque de protection au laser (5) transparente disperse de manière diffuse de la lumière transmise, en particulier de la lumière dans la plage de longueur d'onde entre 380 nm et 780 nm, et/ou **en ce que** la couche de laque de protection au laser (5) transparente présente une valeur de trouble d'au plus 50 unités de trouble, de préférence d'au plus 20 unités de trouble, et/ou
la couche de laque de protection au laser (5) transparente présente un aspect laiteux-trouble et/ou **en ce que** la couche de laque de protection au laser (5) transparente dévie plus de 30 %, de préférence plus de 45 %, de manière encore préférée plus de 65 %, de la lumière transmise, en particulier de la plage de longueur d'onde entre 380 nm et 780 nm, de plus de 2,5° de la direction du faisceau lumineux incident.

4. Film décoratif (1) selon l'une quelconque des revendications précédentes,
**caractérisé en ce que**
la couche de laque de protection laser (5) transparente est une couche de monomères, oligomères, polymères et/ou copolymères, de préférence comprenant du polyméthacrylate de méthyle (PMMA), polyester, polycarbonate (PC), polyamide (PA), polyuréthane (PU) et/ou polychlorure de vinyle (PVC), de manière encore préférée comprenant du PU et/ou PVC et/ou **en ce que** la couche de laque de protection au laser (5) transparente présente du polyacrylate comme liant, et/ou **en ce que** la couche de laque de protection au laser (5) transparente présente des polyétherimides (PEI) et/ou polysulfones, en particulier des poly(aryléthersulfone)s (PAES).

5. Film décoratif (1) selon l'une quelconque des revendications précédentes,
**caractérisé en ce que**
la couche de laque de protection au laser (5) transparente protège l'au moins une seconde couche de laque colorée (6, 6a, 6b), en particulier les couches se trouvant, vu depuis un observateur (7), en dessous de la couche de laque de protection au laser (5) transparente, d'influences environnementales mécaniques, physiques et/ou chimiques.

6. Film décoratif (1) selon l'une quelconque des revendications précédentes,
**caractérisé en ce que**
l'au moins une première couche de laque colorée (4, 4a, 4b) est réalisée de manière opaque et/ou **en ce que** l'au moins une première couche de laque colorée (4, 4a, 4b) présente une transmission, en particulier dans la plage de longueur d'onde entre 380 nm et 780 nm, de 50 % au maximum, de préférence de 20 % au maximum, de manière encore préférée de 5 % au maximum et/ou
l'au moins une première couche de laque colorée (4, 4a, 4b) est multicouche,
en particulier **en ce que** l'au moins une première couche de laque colorée (4, 4a, 4b) est réalisée en deux ou plusieurs premières couches partielles (4b), dans lequel les deux ou plusieurs premières couches partielles (4b) présentent de préférence respectivement une épaisseur de couche entre 0,1 µm et 50 µm, de manière encore préférée entre 0,5 µm et 5,0 µm.

7. Film décoratif (1) selon l'une quelconque des revendications précédentes,
**caractérisé en ce que**
l'au moins une seconde couche de laque colorée (6, 6a, 6b) est réalisée de manière transparente et/ou **en ce que** l'au moins une seconde couche de laque colorée (6, 6a, 6b) présente une transmission, en particulier dans la plage de longueur d'onde entre 380 nm et 780 nm, d'au moins 25 %, de préférence d'au moins 75 %, de manière encore préférée d'au moins 90 % et/ou
l'au moins une seconde couche de laque colorée (6, 6a, 6b) est multicouche, en particulier **en ce que** l'au moins une seconde couche de laque colorée (6, 6a, 6b) est réalisée en deux ou plusieurs secondes couches partielles (6b), dans lequel les deux ou plusieurs secondes couches partielles (6b) présentent de préférence respectivement une épaisseur de couche entre 0,1 µm et 50 µm, de manière encore préférée entre 1,0 µm et 5,0 µm.

8. Film décoratif (1) selon l'une quelconque des revendications précédentes,
**caractérisé en ce que**
l'au moins une seconde couche de laque colorée (6, 6a, 6b) disperse de manière diffuse en particulier de la lumière dans la plage de longueur d'onde entre 380 nm et 780 nm, et/ou **en ce que** l'au moins une seconde couche de laque colorée (6, 6a, 6b) présente une valeur de trouble d'au moins 50 unités de trouble, de préférence d'au moins 75 unités de trouble et/ou
l'au moins une seconde couche de laque colorée (6, 6a, 6b) dévie plus de 75 %, de préférence plus de 85 % de la lumière transmise, en particulier de la plage de longueur d'onde entre 380 nm et 780 nm, de plus de 2,5° de la direction du faisceau lumineux incident.

9. Film décoratif (1) selon la revendication 8,
**caractérisé en ce que**
la couche de laque de protection (8) est claire, en particulier **en ce que** la couche de laque de protection (8) dévie, par diffusion, de la lumière transmise, en particulier de la lumière dans la plage de longueur d'onde entre 380 nm et 780 nm, de moins de 8 %, de préférence de moins de 4 %.

10. Film décoratif (1) selon l'une quelconque des revendications précédentes
**caractérisé en ce que**
l'au moins une structure fonctionnelle électrique réalise un champ de détection capacitif.

11. Film décoratif (1) selon l'une quelconque des revendications précédentes,
**caractérisé en ce que**
toutes les couches agencées en direction d'observation en dessous de la couche de laque de protection au laser (5) transparente sont transparentes, en particulier **en ce que** toutes les couches agencées en dessous de la couche de laque de protection au laser (5) transparente présentent une transmission d'au moins 25 %, de préférence d'au moins 45 %.

12. Procédé de décoration d'une pièce moulée en matière plastique (3) comprenant les étapes suivantes qui sont réalisées en particulier dans l'ordre suivant :
a) la fourniture d'un film décoratif (1), dans lequel le film décoratif (1) comprend au moins une première couche de laque colorée (4, 4a, 4b), au moins une seconde couche de laque colorée (6, 6a, 6b) et une couche de laque de protection au laser (5) transparente, dans lequel la couche de laque de protection au laser (5) transparente est agencée entre l'au moins une première couche de laque colorée (4, 4a, 4b) et l'au moins une seconde couche de laque colorée (6, 6a, 6b) ;
b) l'application du film décoratif (1) sur la pièce moulée en matière plastique (3), de préférence au moyen d'un procédé de transfert à chaud ou froid, de manière encore préférée au moyen de l'estampage à chaud et/ou d'un procédé in-mould ;
c) le retrait au moins de la première couche de laque colorée tournée vers un observateur (7) dans une ou plusieurs premières zones au moyen d'un laser,
dans lequel l'au moins une seconde couche de laque colorée (6, 6a, 6b) présente une transmission d'au moins 10 %,
l'au moins une seconde couche de laque colorée (6, 6a, 6b) dévie plus de 50 % de la lumière transmise de plus de 2,5 de la direction du faisceau lumineux incident,
dans lequel le procédé comprend en outre l'étape suivante :
d) l'agencement des une ou plusieurs couches fonctionnelles (10) électriques avec au moins une structure fonctionnelle électrique sur le côté éloigné de l'observateur (7) de l'au moins une seconde couche de laque colorée (6, 6a, 6b), dans lequel l'au moins une structure fonctionnelle électrique réalise un champ de détection tactile qui fournit une fonctionnalité de champ tactile, dans lequel dans l'étape c), l'au moins une première couche de laque colorée (4, 4a, 4b) est retirée dans les une ou plusieurs premières zones (16a) au moyen du laser (15a) de telle manière que la couche de laque de protection au laser (5) transparente soit exposée,
dans lequel le film décoratif (1) comprend en outre une couche de laque de protection (8) qui est agencée sur le côté tourné vers un observateur (7) du film décoratif (1), et dans lequel la couche de laque de protection (8) est en outre complètement retirée dans les une ou plusieurs premières zones (16a).

13. Procédé selon la revendication 12,
**caractérisé en ce que**
dans l'étape c), toutes les couches agencées en direction d'observation au-dessus de la couche de laque de protection laser (5) transparente sont retirées, en particulier complètement retirées dans les une ou plusieurs premières zones (16a).

14. Procédé selon l'une quelconque des revendications 12 ou 13,
**caractérisé en ce que**
l'étape d) est réalisée entre l'étape a) et b),
et/ou
le procédé comprend en outre l'étape suivante :
e) l'agencement d'un dispositif de rétroéclairage (13), en particulier comprenant des diodes électroluminescentes organiques (OLED), diodes électroluminescentes anorganiques (LED), des microLED (mLED) et/ou des diodes électroluminescentes à point quantique (QLED), dans lequel le dispositif de rétroéclairage est de préférence agencé sur le côté éloigné du film décoratif (1) de la pièce moulée en matière plastique (3).

15. Pièce moulée en matière plastique (3) comprenant un film décoratif (1), dans laquelle le film décoratif (1) comprend au moins une première couche de laque colorée (4, 4a, 4b), au moins une seconde couche de laque colorée (6, 6a, 6b) et une couche de laque de protection au laser (5) transparente, dans laquelle la couche de laque de protection au laser (5) transparente est agencée entre l'au moins une première couche de laque colorée (4, 4a, 4b) et l'au moins une seconde couche de laque colorée (6, 6a, 6b),
dans laquelle l'au moins une seconde couche de laque colorée (6, 6a, 6b) présente une transmission d'au moins 10 %,
dans lequel l'au moins une seconde couche de laque colorée (6, 6a, 6b) dévie plus de 50 % de la lumière transmise de plus de 2,5° de la direction du faisceau lumineux incident,
dans laquelle la pièce formée en matière plastique (3) présente une ou plusieurs couches fonctionnelles (10) électriques avec au moins une structure fonctionnelle électrique sur l'au moins une seconde couche de laque colorée (6, 6a, 6b) éloignée de l'observateur (7), dans laquelle l'au moins une structure fonctionnelle (10) électrique réalise un champ de détection tactile qui fournit une fonctionnalité de champ tactile,
dans laquelle l'au moins une première couche de laque colorée (4, 4a, 4b) tournée vers un observateur (7) est retirée dans une ou plusieurs premières zones (16a) au moyen d'un laser (15a),
dans laquelle le film décoratif (1) comprend en outre une couche de laque de protection (8), dans laquelle la couche de laque de protection (8) est agencée sur le côté tourné vers un observateur (7) du film décoratif (1), et dans laquelle la couche de laque de protection (8) est en outre complètement retirée dans les une ou plusieurs premières zones (16a).
